(19) 

Europäisches
Patentamt
European
Patent Office
Office européen
des brevets

(11) **EP 4 571 661 A1**

(12) **EUROPEAN PATENT APPLICATION**
published in accordance with Art. 153(4) EPC

(43) Date of publication:
**18.06.2025 Bulletin 2025/25**

(21) Application number: **22955123.9**

(22) Date of filing: **08.12.2022**

(51) International Patent Classification (IPC):
**G06T 19/00** (2011.01)   **G06T 15/00** (2011.01)
**G02B 27/01** (2006.01)   **G02B 30/10** (2020.01)

(52) Cooperative Patent Classification (CPC):
**G02B 27/01; G02B 30/10; G06T 15/00; G06T 19/00**

(86) International application number:
**PCT/KR2022/019982**

(87) International publication number:
**WO 2024/034751 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.08.2022 KR 20220099479**

(71) Applicant: **LG Electronics Inc.
Yeongdeungpo-gu
Seoul 07336 (KR)**

(72) Inventors:
• **CHOI, Sunghwan
Seoul 06772 (KR)**
• **JUNG, Dukyung
Seoul 06772 (KR)**

(74) Representative: **Vossius & Partner
Patentanwälte Rechtsanwälte mbB
Siebertstrasse 3
81675 München (DE)**

(54) **SIGNAL PROCESSING DEVICE AND AUTOMOTIVE AUGMENTED REALITY DEVICE HAVING SAME**

(57)     A signal processing device and an augmented reality apparatus for a vehicle including the same are disclosed. The signal processing device according to an embodiment of the present disclosure includes: a memory configured to store map data; and a processor configured to generate a graphical overlay based on camera data from a camera, or the map data, or sensor data from a sensor device, wherein in response to a vehicle speed based on speed data from the sensor device being a first speed, the processor is configured to output a graphical overlay at a first frame rate, and in response to a vehicle speed being a second speed higher than the first speed, the processor is configured to output a graphical overlay at a second frame rate greater than the first frame rate. Accordingly, an augmented reality-based graphical overlay may be rapidly provided according to a vehicle speed.

FIG. 1

## Description

## BACKGROUND

### 1. Field

. The present disclosure relates to a signal processing device and an augmented reality apparatus for a vehicle including the same, and more particularly to a signal processing device capable of rapidly providing an augmented reality-based graphical overlay according to a vehicle speed, and an augmented reality apparatus for a vehicle including the signal processing device.

### 2. Description of the Related Art

. A vehicle is an apparatus that a driver moves in a desired direction. A typical example of the vehicle is an automobile.

. Meanwhile, a display apparatus for vehicles is mounted in the vehicle to provide user convenience.

. For example, a display is disposed in a cluster in order to display various types of information. Meanwhile, in addition to the cluster, various displays, such as an audio video navigation (AVN) display, a head-up display for displaying a projected image on the windshield, etc., are mounted in the vehicle to display vehicle driving information and the like.

. Particularly, the head-up display, which displays the projected image on the windshield, may be referred to as an in-vehicle augmented reality apparatus.

. Meanwhile, when a delay occurs while the in-vehicle augmented reality apparatus provides guide information related to vehicle traveling, the delay increases the possibility of safety problems.

. Particularly, the delay causes a serious problem as the vehicle speed increases when the in-vehicle augmented reality apparatus provides guide information related to vehicle traveling.

## SUMMARY

. It is an objective of the present disclosure to provide a signal processing device capable of rapidly providing an augmented reality-based graphical overlay according to a vehicle speed, and an augmented reality apparatus for a vehicle including the signal processing device.

. Meanwhile, it is another objective of the present disclosure to provide a signal processing device capable of rapidly and stably providing an augmented reality-based graphical overlay, and an augmented reality apparatus for a vehicle including the signal processing device.

. In accordance with an aspect of the present disclosure, the above and other objectives can be accomplished by providing a signal processing device including: a memory configured to store map data; and a processor configured to generate a graphical overlay based on camera data from a camera, or the map data, or sensor data from a sensor device, wherein in response to a vehicle speed based on speed data from the sensor device being a first speed, the processor is configured to output a graphical overlay at a first frame rate, and in response to a vehicle speed being a second speed higher than the first speed, the processor is configured to output a graphical overlay at a second frame rate greater than the first frame rate.

. Meanwhile, the processor may be configured to execute a plurality of virtual machines on an executed hypervisor, to detect an object from the camera data through a first engine executed in one of the plurality of virtual machines, to transmit the detected object to a second engine through a shared memory based on the hypervisor, to generate the graphical overlay based on the detected object through the second engine executed in some of the plurality of virtual machines, and to output the generated graphical overlay.

. Meanwhile, in response to the vehicle speed being a second speed higher than the first speed, the second engine may be configured to output a graphical overlay at a second frame rate greater than the first frame rate.

. Meanwhile, the processor may be configured to detect object from the camera data, output object-based frame data based on the detected object, through the first engine, and generate graphical overlay-based frame data based on the object-based frame data, through the second engine and output the graphical overlay-based frame data.

. Meanwhile, in the case in which a ratio of the graphical overlay-based frame data to the object-based frame data is constant, the processor may be configured to increase a frame rate of the graphical overlay-based frame data.

. Meanwhile, in the case in which a ratio of the graphical overlay-based frame data to the object-based frame data is an integer multiple, the processor may be configured to increase the frame rate of the graphical overlay-based frame data.

. Meanwhile, the processor may be configured to increase the frame rate of the graphical overlay-based frame data as the vehicle speed increases.

. Meanwhile, the processor may be configured to display the graphical overlay-based frame data or to output the graphical overlay-based frame data to an image projection device.

. Meanwhile, the processor may be configured to execute a plurality of virtual machines on an executed hypervisor, to execute the first engine in one of the plurality of virtual machines, to execute the second engine in another one of the plurality of virtual machines, and to transmit the object-based frame data to the second engine through a shared memory based on the hypervisor.

. Meanwhile, a server virtual machine among the plurality of virtual machines may be configured to execute the first engine, and a guest virtual machine among the plurality of virtual machines may be configured to execute the second engine.

. Meanwhile, the server virtual machine among the plurality of virtual machines may be configured to generate guide information related to vehicle traveling through a third engine based on the sensor data from the sensor device and the map data from the memory, wherein the second engine may be configured to generate the graphical overlay-based frame data based on the generated guide information related to vehicle traveling and the detected object, and to output the generated graphical overlay-based frame data.

. Meanwhile, the processor may be configured to execute a plurality of virtual machines on an executed hypervisor, and to execute the first engine or the second engine in one of the plurality of virtual machines.

. Meanwhile, a server virtual machine among the plurality of virtual machines may be configured to execute the first engine and the second engine.

. Meanwhile, the server virtual machine among the plurality of virtual machines may be configured to generate guide information related to vehicle traveling through a third engine based on the sensor data from the sensor device and the map data from the memory, wherein the second engine may be configured to generate the graphical overlay-based frame data based on the generated guide information related to vehicle traveling and the detected object, and to output the generated graphical overlay-based frame data.

. In accordance with another aspect of the present disclosure, the above and other objectives can be accomplished by providing a signal processing device including: a memory configured to store map data; and a processor configured to generate a graphical overlay based on camera data from a camera, or the map data, or sensor data from a sensor device, wherein the processor is configured to execute a plurality of virtual machines on an executed hypervisor, to detect an object from the camera data through a first engine executed in one of the plurality of virtual machines, to output object-based frame data based on the object detected from the camera data, to generate graphical overlay-based frame data based on the object-based frame data, through a second engine executed in some of the plurality of virtual machines, and output the graphical overlay-based frame data, wherein in the case in which a ratio of the graphical overlay-based frame data to the object-based frame data is constant, the processor is configured to increase a frame rate of the graphical overlay-based frame data.

. Meanwhile, in the case in which a ratio of the graphical overlay-based frame data to the object-based frame data is an integer multiple, the processor may be configured to increase the frame rate of the graphical overlay-based frame data.

. Meanwhile, the processor may be configured to increase the frame rate of the graphical overlay-based frame data as the vehicle speed increases.

. In accordance with yet another aspect of the present disclosure, the above and other objectives can be accomplished by providing an augmented reality apparatus for a vehicle, the apparatus including: at least one camera; and a signal processing device including a processor configured to generate a graphical overlay based on camera data from the camera.

## EFFECTS OF THE DISCLOSURE

. A signal processing device according to an embodiment of the present disclosure includes: a memory configured to store map data; and a processor configured to generate a graphical overlay based on camera data from a camera, or the map data, or sensor data from a sensor device, wherein in response to a vehicle speed based on speed data from the sensor device being a first speed, the processor is configured to output a graphical overlay at a first frame rate, and in response to a vehicle speed being a second speed higher than the first speed, the processor is configured to output a graphical overlay at a second frame rate greater than the first frame rate. Accordingly, an augmented reality-based graphical overlay may be rapidly provided according to a vehicle speed.

. Meanwhile, the processor may be configured to execute a plurality of virtual machines on an executed hypervisor, to detect an object from the camera data through a first engine executed in one of the plurality of virtual machines, to transmit the detected object to a second engine through a shared memory based on the hypervisor, to generate the graphical overlay based on the detected object through the second engine executed in some of the plurality of virtual machines, and to output the generated graphical overlay. Accordingly, an augmented reality-based graphical overlay may be rapidly and stably provided.

. Meanwhile, in response to the vehicle speed being a second speed higher than the first speed, the second engine may be configured to output a graphical overlay at a second frame rate greater than the first frame rate. Accordingly, an augmented reality-based graphical overlay may be rapidly provided according to a vehicle speed.

. Meanwhile, the processor may be configured to detect object from the camera data, output object-based frame data based on the detected object, through the first engine, and generate graphical overlay-based frame data based on the object-based frame data, through the second engine and output the graphical overlay-based frame data. Accordingly, an augmented reality-based graphical overlay may be rapidly and stably provided.

. Meanwhile, in the case in which a ratio of the graphical overlay-based frame data to the object-based frame data is constant, the processor may be configured to increase a frame rate of the graphical overlay-based frame data. Accordingly, an augmented reality-based graphical overlay may be rapidly and stably provided.

. Meanwhile, in the case in which a ratio of the graphical overlay-based frame data to the object-based frame data is an integer multiple, the processor may be configured to increase the frame rate of the graphical overlay-based frame data. Accordingly, an augmented reality-based graphical overlay may be rapidly and stably provided.

. Meanwhile, the processor may be configured to increase the frame rate of the graphical overlay-based frame data as the vehicle speed increases. Accordingly, an augmented reality-based graphical overlay may be rapidly provided according to a vehicle speed.

. Meanwhile, the processor may be configured to display the graphical overlay-based frame data or to output the graphical overlay-based frame data to an image projection device. Accordingly, an augmented reality-based graphical overlay may be rapidly provided through the image projection device.

. Meanwhile, the processor may be configured to execute a plurality of virtual machines on an executed hypervisor, to execute the first engine in one of the plurality of virtual machines, to execute the second engine in another one of the plurality of virtual machines, and to transmit the object-based frame data to the second engine through a shared memory based on the hypervisor. Accordingly, an augmented reality-based graphical overlay may be rapidly and stably provided.

. Meanwhile, a server virtual machine among the plurality of virtual machines may be configured to execute the first engine, and a guest virtual machine among the plurality of virtual machines may be configured to execute the second engine. Accordingly, an augmented reality-based graphical overlay may be rapidly and stably provided.

. Meanwhile, the server virtual machine among the plurality of virtual machines may be configured to generate guide information related to vehicle traveling through a third engine based on the sensor data from the sensor device and the map data from the memory, wherein the second engine may be configured to generate the graphical overlay-based frame data based on the generated guide information related to vehicle traveling and the detected object, and to output the generated graphical overlay-based frame data. Accordingly, an augmented reality-based graphical overlay may be rapidly and stably provided.

. Meanwhile, the processor may be configured to execute a plurality of virtual machines on an executed hypervisor, and to execute the first engine or the second engine in one of the plurality of virtual machines. Accordingly, an augmented reality-based graphical overlay may be rapidly and stably provided.

. Meanwhile, a server virtual machine among the plurality of virtual machines may be configured to execute the first engine and the second engine. Accordingly, an augmented reality-based graphical overlay may be rapidly and stably provided.

. Meanwhile, the server virtual machine among the plurality of virtual machines may be configured to generate guide information related to vehicle traveling through a third engine based on the sensor data from the sensor device and the map data from the memory, wherein the second engine may be configured to generate the graphical overlay-based frame data based on the generated guide information related to vehicle traveling and the detected object, and to output the generated graphical overlay-based frame data. Accordingly, an augmented reality-based graphical overlay may be rapidly and stably provided.

. In accordance with another aspect of the present disclosure, the above and other objectives can be accomplished by providing a signal processing device including: a memory configured to store map data; and a processor configured to generate a graphical overlay based on camera data from a camera, or the map data, or sensor data from a sensor device, wherein the processor is configured to execute a plurality of virtual machines on an executed hypervisor, to detect an object from the camera data through a first engine executed in one of the plurality of virtual machines, to output object-based frame data based on the object detected from the camera data, to generate graphical overlay-based frame data based on the object-based frame data, through a second engine executed in some of the plurality of virtual machines, and output the graphical overlay-based frame data, wherein in the case in which a ratio of the graphical overlay-based frame data to the object-based frame data is constant, the processor is configured to increase a frame rate of the graphical overlay-based frame data. Accordingly, an augmented reality-based graphical overlay may be rapidly and stably provided.

. Meanwhile, in the case in which a ratio of the graphical overlay-based frame data to the object-based frame data is an integer multiple, the processor may be configured to increase the frame rate of the graphical overlay-based frame data. Accordingly, an augmented reality-based graphical overlay may be rapidly and stably provided.

. Meanwhile, the processor may be configured to increase the frame rate of the graphical overlay-based frame data as the vehicle speed increases. Accordingly, an augmented reality-based graphical overlay may be rapidly provided according to a vehicle speed.

. In accordance with yet another aspect of the present disclosure, the above and other objectives can be accomplished by providing an augmented reality apparatus for a vehicle, the apparatus including: at least one camera; and a signal processing device including a processor configured to generate a graphical overlay based on camera data from the camera. Accordingly, an augmented reality-based graphical overlay may be rapidly provided according to a vehicle speed.

## BRIEF DESCRIPTION OF THE DRAWINGS

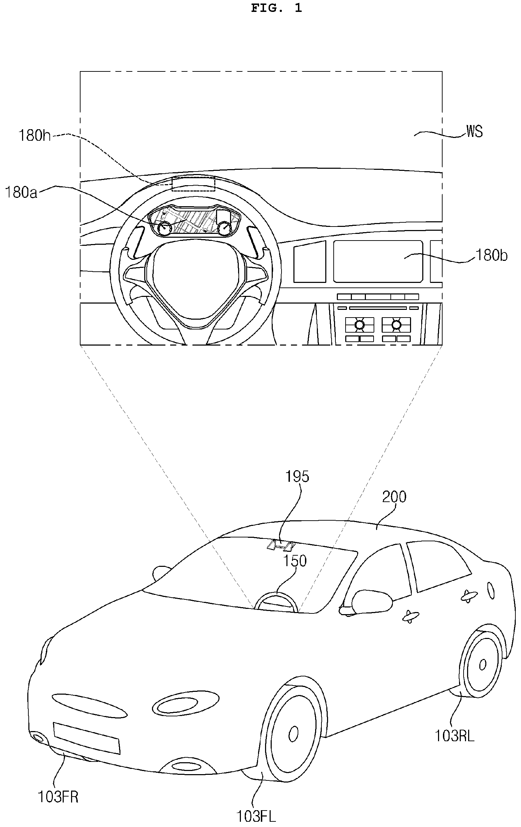

. FIG. 1 is a view showing an example of the exterior and interior of a vehicle;

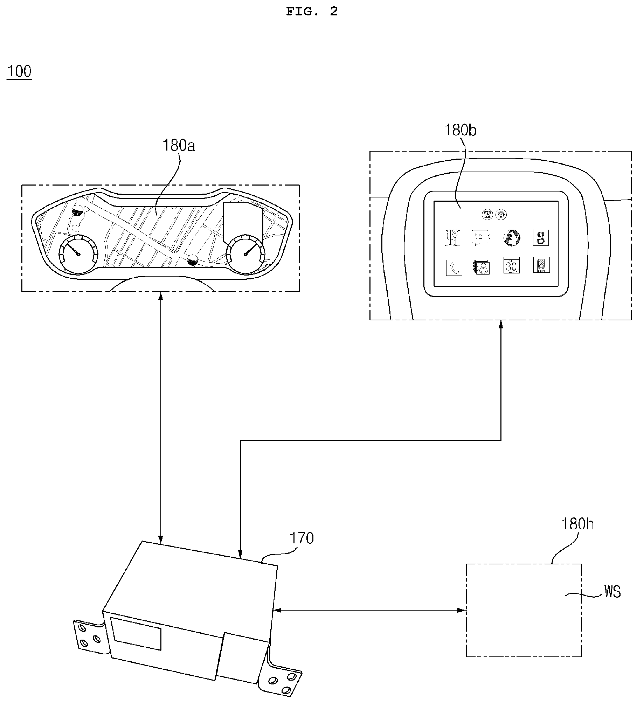

. FIG. 2 is a view showing the external appearance of a display apparatus for vehicles according to an embodiment of the present disclosure;

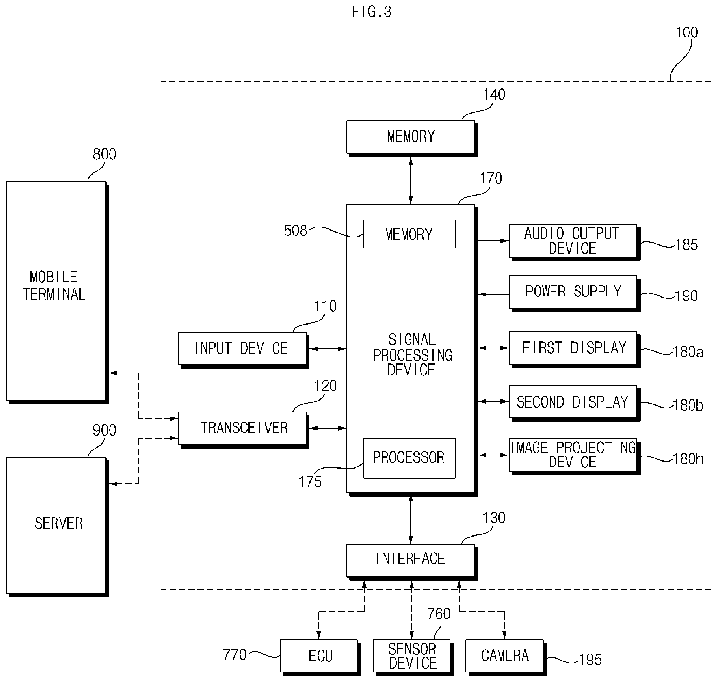

. FIG. 3 illustrates an example of an internal block diagram of the display apparatus for vehicles of FIG. 2;

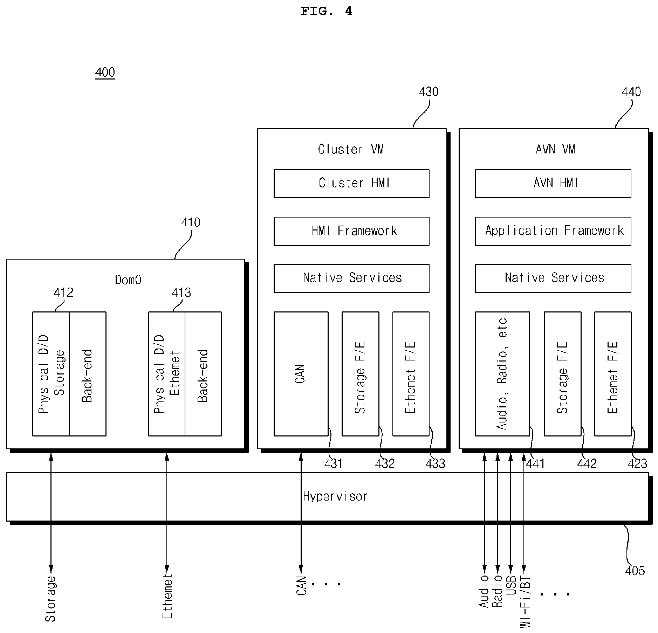

. FIG. 4 is a view showing a system driven in a signal processing device related to the present disclosure;

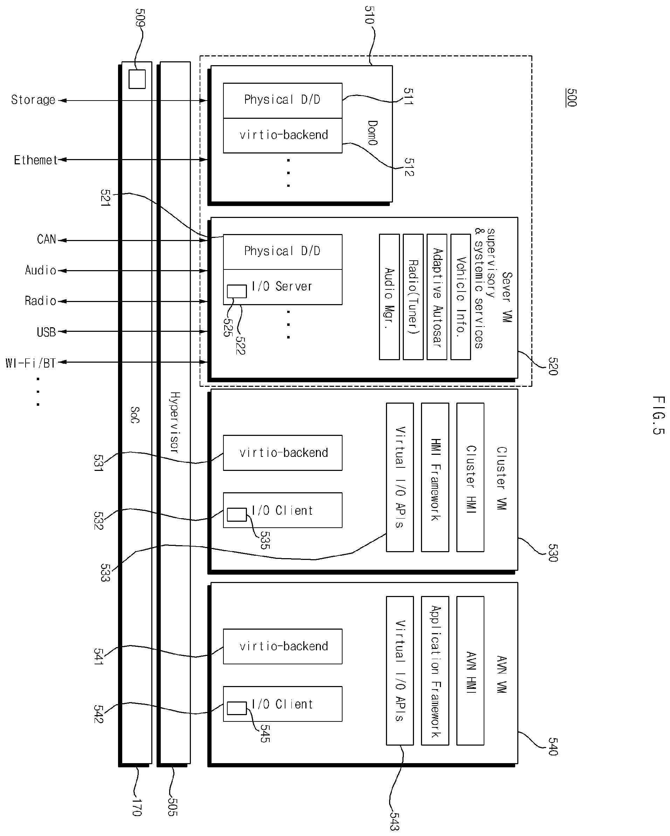

. FIG. 5 is a view showing an example of a system driven in a signal processing device according to an embodiment of the present disclosure;

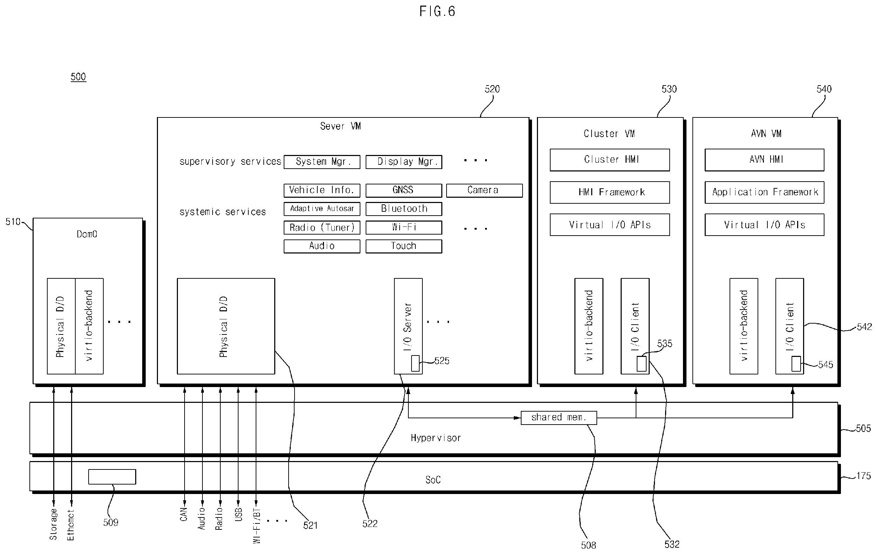

. FIG. 6 is a view referred to in the description of operation of the system driven in the signal processing device according to the embodiment of the present disclosure;

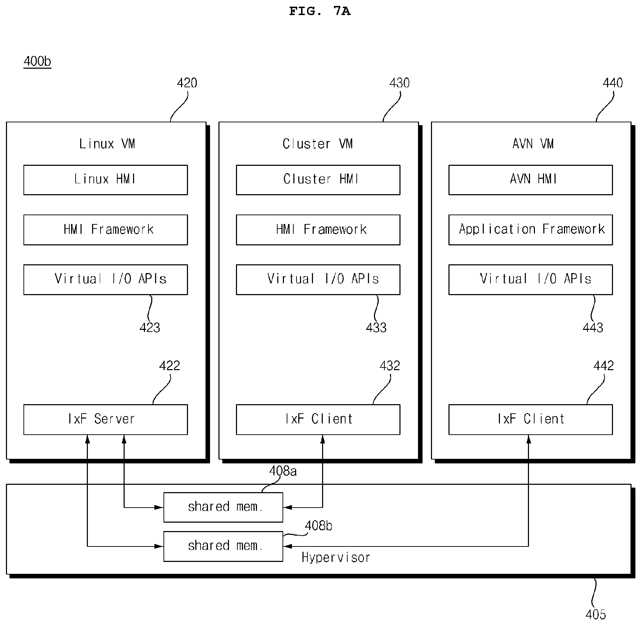

. FIGS. 7A to 9D are diagrams referred to in the description of FIG. 5 or FIG. 6;

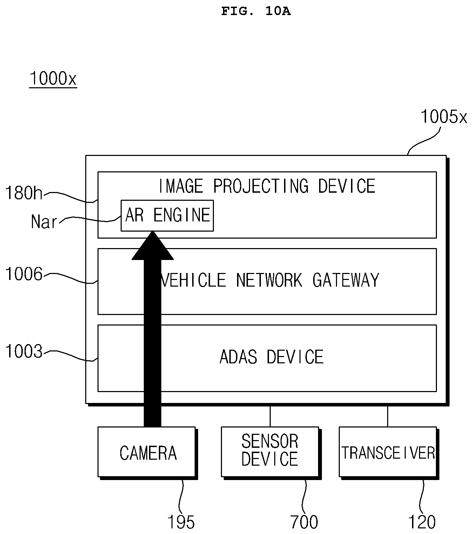

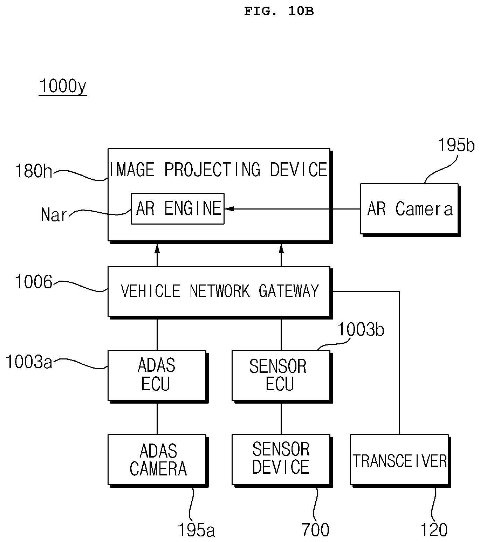

. FIGS. 10A and 10B are internal block diagrams illustrating various examples of an augmented reality apparatus for a vehicle associated with the present disclosure;

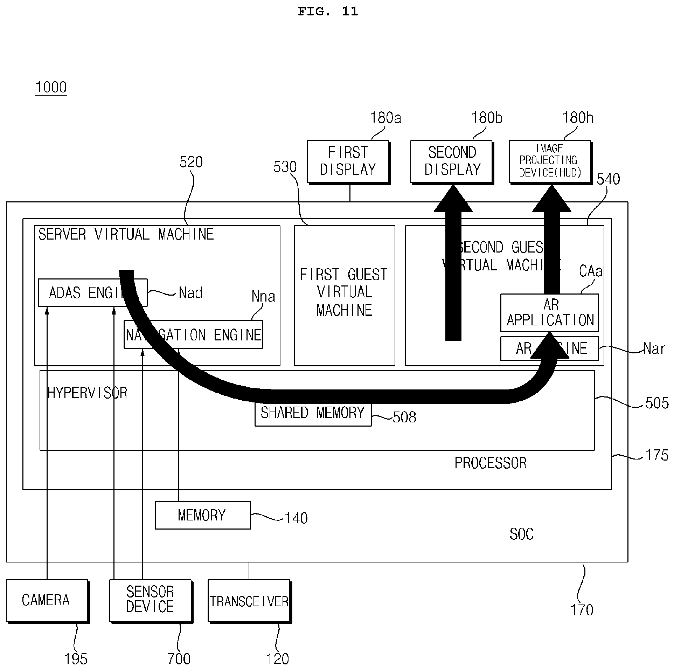

. FIG. 11 is an exemplary internal block diagram illustrating an augmented reality apparatus for a vehicle according to an embodiment of the present disclosure;

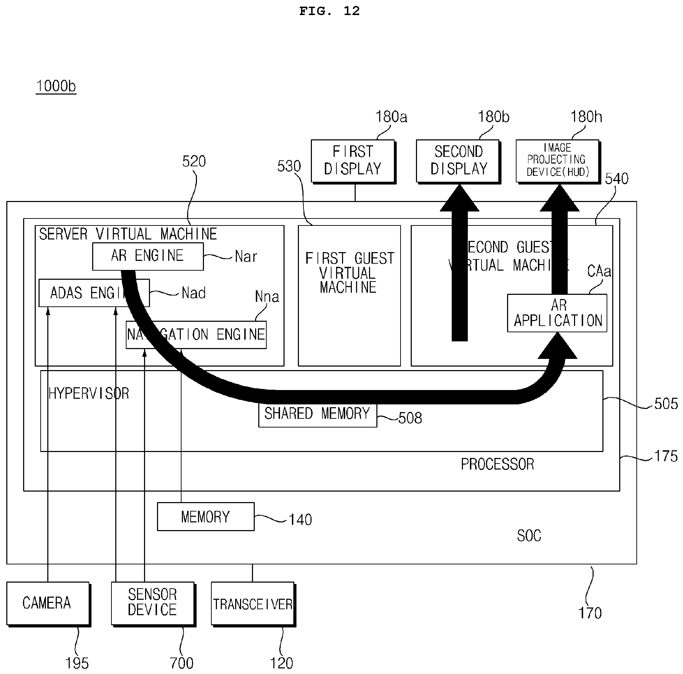

. FIG. 12 is an internal block diagram illustrating an augmented reality apparatus for a vehicle according to another embodiment of the present disclosure;

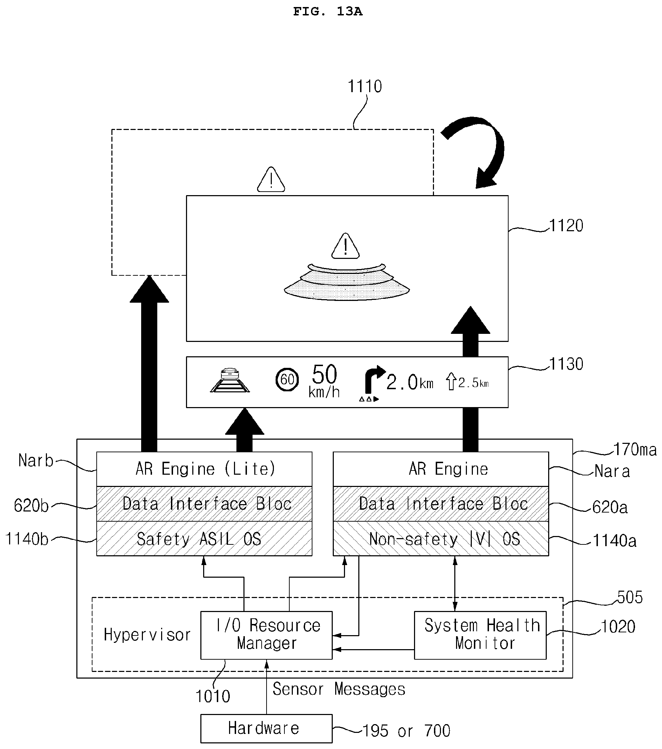

. FIGS. 13A to 13C are diagrams referred to in the description of a signal processing device of FIGS. 11 and 12;

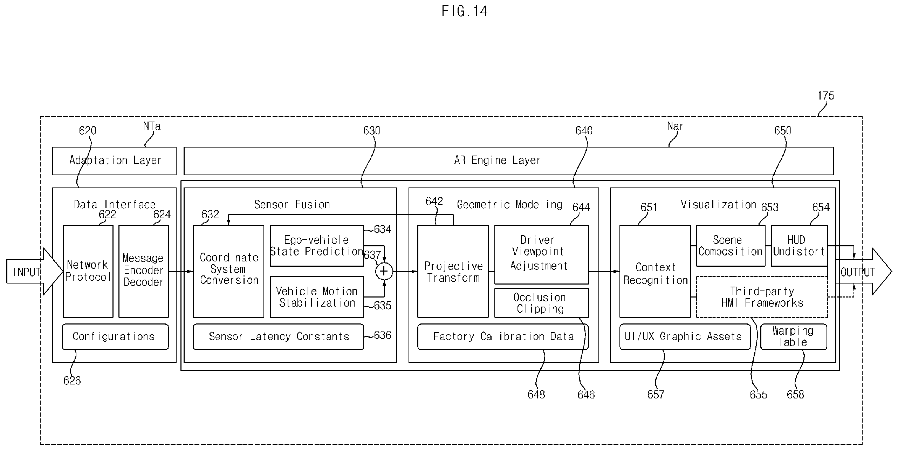

. FIG. 14 is an exemplary internal block diagram of a processor of FIGS. 11 and 12;

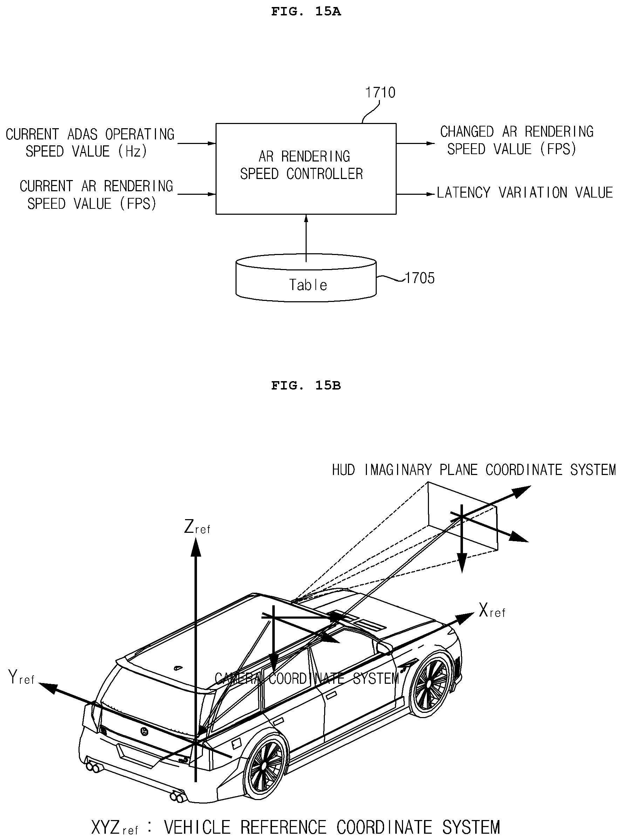

. FIGS. 15A to 15G are diagrams referred to in the description of FIG. 14;

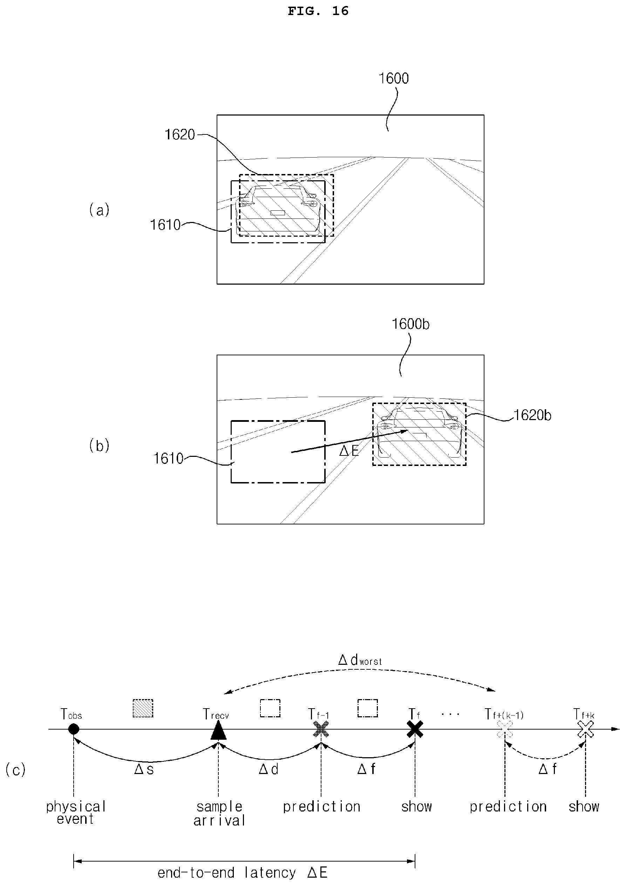

. FIG. 16 is a diagram illustrating a delay between a detected object and a graphical overlay;

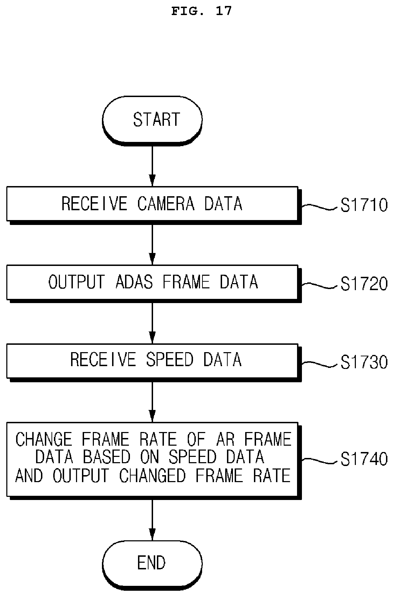

. FIG. 17 is a flowchart illustrating operation of a signal processing device according to an embodiment of the present disclosure; and

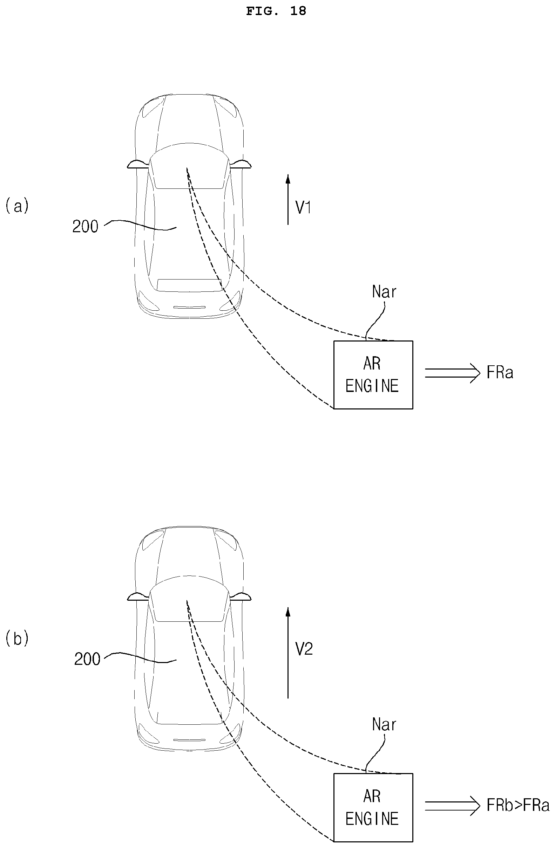

. FIGS. 18 to 20C are diagrams referred to in the description of FIG. 17.

## DETAILED DESCRIPTION

. Hereinafter, the present disclosure will be described in detail with reference to the accompanying drawings.

. With respect to constituent elements used in the following description, suffixes "module" and "unit" are given only in consideration of ease in preparation of the specification, and do not have or serve different meanings. Accordingly, the suffixes "module" and "unit" may be used interchangeably.

. FIG. 1 is a view showing an example of the exterior and interior of a vehicle.

. Referring to the figure, the vehicle 200 is moved by a plurality of wheels 103FR, 103FL, 103RL,... rotated by a power source and a steering wheel 150 configured to adjust an advancing direction of the vehicle 200.

. Meanwhile, the vehicle 200 may be provided with a camera 195 configured to acquire an image of the front of the vehicle.

. Meanwhile, the vehicle 200 may be provided therein with a plurality of displays 180a and 180b configured to display images, information, etc., and an image projection device 180h configured to project an image onto a windshield WS.

. In FIG. 1, a cluster display 180a and an audio video navigation (AVN) display 180b are illustrated as the plurality of displays 180a and 180b, and the image projection device 180h is illustrated as the head-up display (HUD).

. Meanwhile, the audio video navigation (AVN) display 180b may also be called a center information display.

. Meanwhile, the vehicle 200 described in this specification may be a concept including all of a vehicle having an engine as a power source, a hybrid vehicle having an engine and an electric motor as a power source, and an electric vehicle having an electric motor as a power source.

. FIG. 2 is a view showing the external appearance of a display apparatus for vehicles according to an embodiment of the present disclosure.

. A vehicle display apparatus 100 according to an embodiment of the present disclosure may include a plurality of displays 180a and 180b, an image projection device 180h, and a signal processing device 170 configured to perform signal processing for displaying images, information, and the like on the plurality of displays 180a and 180b and the image projection device 180h.

. The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

. The image projection device 180h, which is a head-up display (HUD), may include an optical device (not shown) for image projection.

. The signal processing device 170 may include a shared memory 508 and a processor 175, and may execute first to third virtual machines 520 to 540 on a hypervisor 505 in the processor 175.

. The first virtual machine 520, which is a server virtual machine, may control a second virtual machine 530 and a third virtual machine 50 which are guest virtual machines.

. Meanwhile, the second virtual machine may be referred to as a first guest virtual machine, and the third virtual machine may be referred to as a second guest virtual machine.

. The first guest virtual machine 530 may operate for the first display 180a, and the second guest virtual machine 540 may operate for the second display 180b.

. Meanwhile, the server virtual machine 520 in the processor 715 may be configured to set up the shared memory 508 based on the hypervisor 505 for transmission of identical data to the first guest virtual machine 530 and the second guest virtual machine 540. Accordingly, the first display 180a and the second display 180b in a vehicle may display identical information or identical images in a synchronized manner.

. Meanwhile, the server virtual machine 520 in the processor 175 may receive and process wheel speed sensor data of the vehicle, and may transmit the processed wheel speed sensor data to at least one of the first guest virtual machine 530 or the second guest virtual machine 540. Accordingly, at least one virtual machine may share the wheel speed sensor data of the vehicle.

. Accordingly, it is possible to control various displays 180a and 180b and the image projection device 180h by using the single signal processing device 170.

. Meanwhile, some of the plurality of displays 180a to 180b may be operated based on a Linux Operating System (OS), and others may be operated based on a Web Operating System (OS).

. The signal processing device 170 according to the embodiment of the present disclosure may be configured to operate displays 180a to 180b under various operating systems also display identical information or identical images in a synchronized state.

. FIG. 3 illustrates an example of an internal block diagram of the display apparatus for vehicles according to the embodiment of the present disclosure.

. Referring to FIG. 3, the vehicle display apparatus 100 according to the embodiment of the present disclosure may include an input device 110, a transceiver 120, an interface 130, a memory 140, a signal processing device 170, a plurality of displays 180a to 180b, an image projection device 180h, an audio output device 185, and a power supply 190.

. The input device 110 may include a physical button or pad for button input or touch input.

. Meanwhile, the input device 110 may include a microphone (not shown) for user voice input.

. The transceiver 120 may wirelessly exchange data with a mobile terminal 800 or a server (not shown).

. In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

. The transceiver 120 may receive weather information and road traffic situation information, such as transport protocol expert group (TPEG) information, from the mobile terminal 800 or the server (not shown). To this end, the transceiver 120 may include a mobile communication module (not shown).

. The interface 130 may receive sensor information from an electronic control unit (ECU) 770 or a sensor device 750, and may transmit the received information to the signal processing device 170.

. Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

. The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

. Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

. The memory 140 may store various data necessary for overall operation of the display apparatus 100 for vehicles, such as programs for processing or control of the signal processing device 170.

. For example, the memory 140 may store data about the hypervisor, the server virtual machine 520, and the plurality of guest virtual machines which are to be executed in the processor 175.

. The audio output device 185 may convert an electrical signal from the signal processing device 170 into an audio signal, and may output the audio signal. To this end, the audio output device 185 may include a speaker and the like.

. The power supply 190 may supply power necessary to operate components under control of the signal processing device 170. In particular, the power supply 190 may receive power from a battery in the vehicle.

. The image projection device 180h includes an optical device (not shown) for image projection and may be controlled by the signal processing device 170 to output an augmented reality-based object.

. For example, the image projection device 180h may output vehicle speed information, vehicle heading direction information, a preceding vehicle object, an indicator of a distance to the preceding vehicle, and the like.

. In another example, the image projection device 180h may output an augmented reality lane carpet corresponding to a lane image, an augmented reality route carpet, or an augmented reality dynamic carpet.

. The signal processing device 170 may control the overall operation of each unit in the vehicle display apparatus 100.

. For example, the signal processing device 170 may include the shared memory 508 and the processor 175 configured to perform signal processing for the displays 180a and 180b.

. The processor 175 may execute the hypervisor 505 (see FIG. 5), and may execute the server virtual machine 520 and the plurality of guest virtual machines 530 and 540 on the hypervisor 505 that runs (see FIG. 5).

. In this case, the first guest virtual machine 530 may operate for the first display 180a, and the second guest virtual machine 540 may operate for the second display 180b.

. For example, the server virtual machine 520 in the processor 715 may receive, process, and output vehicle sensor data, position information data, camera image data, audio data, or touch input data. Data processing may be efficiently performed by separating data processed only by a legacy virtual machine and data processed by the server virtual machine 520. In particular, the server virtual machine 520 may process most of the data, thereby allowing 1:N data sharing.

. In another example, the server virtual machine 520 may directly receive and process CAN communication data, audio data, radio data, USB data, and wireless communication data for the first and second guest virtual machines 530 and 540.

. Further, the server virtual machine 520 may transmit the processed data to the first and second guest virtual machines 530 and 540.

. Accordingly, among the server virtual machine 520 and the plurality of guest virtual machines 530 and 540, only the server virtual machine 520 may receive communication data and external input data and may perform signal processing, whereby load in signal processing by the other virtual machines may be reduced and 1:N data communication may be achieved, and therefore synchronization at the time of data sharing may be achieved.

. Meanwhile, the server virtual machine 520 may be configured to write data in the shared memory 508, whereby the first guest virtual machine 530 and the second guest virtual machine 540 share identical data.

. For example, the server virtual machine 520 may be configured to write vehicle sensor data, the position information data, the camera image data, or the touch input data in the shared memory 508, whereby the first guest virtual machine 530 and the second guest virtual machine 540 share identical data. Accordingly, 1:N data sharing may be achieved.

. As a result, the server virtual machine 520 may process most of the data, thereby allowing 1:N data sharing.

. Meanwhile, the server virtual machine 520 in the processor 175 may be configured to set up the shared memory 508 based on the hypervisor 505 for transmission of identical data to the first guest virtual machine 530 and the second guest virtual machine 540.

. That is, the server virtual machine 520 in the processor 175 may transmit identical data to the first guest virtual machine 530 and the second guest virtual machine 540 in a synchronized manner by using the shared memory 508 based on the hypervisor 505. Accordingly, the plurality of displays 180a and 180b in the vehicle may display identical images in a synchronized manner.

. Meanwhile, the signal processing device 170 may process various signals, such as an audio signal, an image signal, and a data signal. To this end, the signal processing device 170 may be implemented in the form of a system on chip (SOC).

. FIG. 4 is a view showing a system driven in a signal processing device related to the present disclosure.

. Referring to the figure, FIG. 4 is a view illustrating that virtual machines are used for the cluster display 180a and the AVN display 180b.

. The system 400 driven in the signal processing device of FIG. 4 illustrates that a cluster virtual machine 430 and an AVN virtual machine 440 are executed through a hypervisor 405 in the processor 175.

. Meanwhile, the system 400 driven in the signal processing device of FIG. 4 illustrates that a legacy virtual machine 410 is also executed on the hypervisor 405 in the processor 175.

. The legacy virtual machine 410 may include an interface 412 for data communication with the memory 140 and an interface 413 for Ethernet communication.

. Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

. Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

. In the system 400, there is a disadvantage in that CAN communication data are input and output only in the cluster virtual machine 430, whereby the CAN communication data cannot be utilized in the AVN virtual machine 440.

. Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

. Meanwhile, there is a drawback in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

. Therefore, the present disclosure proposes a scheme for improving the system of FIG. 4. That is, unlike FIG. 4, virtual machines are divided into the server virtual machine 520 and the guest virtual machines such that various memory data, communication data, and the like are input and output in the server virtual machine 520, instead of the guest virtual machines, which will be described below with reference to FIG. 5 and subsequent figures.

. FIG. 5 is a view showing an example of a system running on a signal processing device according to an embodiment of the present disclosure.

. Referring to the figure, a system 500 of FIG. 5 is illustrated in which the server virtual machine 520, which is a server virtual machine, and the first guest virtual machine 530 and the second guest virtual machine 540, which are guest virtual machines, are executed on the hypervisor 505 in the processor 175 of the signal processing device 170.

. The first guest virtual machine 530 may be a virtual machine for the cluster display 180a, and the second guest virtual machine 540 may be a virtual machine for the AVN display 180b.

. That is, the first guest virtual machine 530 and the second guest virtual machine 540 may be operated for image rendering of the cluster display 180a and the AVN display 180b, respectively.

. Meanwhile, it is also illustrated that in the system 500 running on the signal processing device 170 of FIG. 5, a legacy virtual machine 510 is also executed on the hypervisor 505 in the processor 175.

. The legacy virtual machine 510 may include an interface 511 for data communication and Ethernet communication with the memory 140.

. Meanwhile, the legacy virtual machine 510 may further include a virtio-backend interface 512 for data communication with the first and second guest virtual machines 530 and 540.

. The server virtual machine 520 may include an interface 521 for input and output of audio data, radio data, USB data, and wireless communication data, and an input and output server interface 522 for data communication with the guest virtual machines.

. That is, the server virtual machine 520, which is a server virtual machine, may provide inputs/outputs (I/O) difficult to virtualize with standard virtualization technology (VirtIO) to a plurality of guest virtual machines, **e.g.,** the first and second guest virtual machines 530 and 540.

. Meanwhile, the server virtual machine 520, which is a server virtual machine, may control radio data and audio data at a supervisor level, and may provide the data to a plurality of guest virtual machines, e.g., the first and second guest virtual machines 530 and 540, and the like.

. Meanwhile, the server virtual machine 520, which is a server virtual machine, may process vehicle data, sensor data, and surroundings-of-vehicle information, and may provide the processed data or information to a plurality of guest virtual machines, e.g., the first and second guest virtual machines 530 and 540, and the like.

. Meanwhile, the server virtual machine 520 may provide supervisory services, such as processing of vehicle data and audio routing management, and the like.

. Next, the first guest virtual machine 530 may include an input and output client interface 532 for data communication with the server virtual machine 520 and APIs 533 configured to control the input and output client interface 532.

. In addition, the first guest virtual machine 530 may include a virtio-backend interface for data communication with the legacy virtual machine 510.

. The first guest virtual machine 530 may receive memory data by communication with the memory 140 and Ethernet data by Ethernet communication from the virtio-backend interface 512 of the legacy virtual machine 510 through the virtio-backend interface.

. Next, the second guest virtual machine 540 may include an input and output client interface 542 for data communication with the server virtual machine 520 and APIs 543 configured to control the input and output client interface 542.

. In addition, the second guest virtual machine 540 may include a virtio-backend interface for data communication with the legacy virtual machine 510.

. The second guest virtual machine 540 may receive memory data by communication with the memory 140 and Ethernet data by Ethernet communication from the virtio-backend interface 512 of the legacy virtual machine 510 through the virtio-backend interface.

. Meanwhile, unlike FIG. 5, the legacy virtual machine 510 may be provided in the server virtual machine 520.

. In the system 500, CAN communication data, such as sensing data, are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

. Also, in the system 500 of FIG. 5, audio data, radio data, USB data, and wireless communication data are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

. Meanwhile, in the system 500 of FIG. 5, the first and second guest virtual machines 530 and 540 may operate on different operating systems.

. For example, the first guest virtual machine 540 may operate on Linux OS, and the second guest virtual machine 540 may operate on a Web-based OS.

. In the server virtual machine 520, the shared memory 508 based on the hypervisor 505 is set up for data sharing even when the first and second guest virtual machines 530 and 540 operate on different operating systems. Accordingly, even when the first and second guest virtual machines 530 and 540 operate on different operating systems, identical data or identical images may be shared in a synchronized manner. As a result, the plurality of displays 180a and 180b may display identical data or identical images in a synchronized manner.

. FIG. 6 is a diagram referred to in the description of operation of a system running on a signal processing device according to the embodiment of the present disclosure, and FIGS. 7A to 9D are diagrams referred to in the description of FIG. 5 or FIG. 6.

. First, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may be configured to set up the shared memory 508 based on the hypervisor 505 for data transmission to the first and second guest virtual machines 530 and 540.

. For example, as an example of identical data, identical image data may be transmitted from the server virtual machine 520 to the first guest virtual machine 530 and the second guest virtual machine 540. Accordingly, the plurality of displays 180a and 180b in the vehicle may display identical images in a synchronized manner.

. Meanwhile, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may transmit identical data to the first and second guest virtual machines 530 and 540 in a synchronized manner by using the shared memory 508 based on the hypervisor 505.

. For example, examples of identical data may include CAN communication data, audio data, radio data, USB data, wireless communication data, position information data, or touch data, and the like. Accordingly, the plurality of displays 180a and 180b in the vehicle may display identical data in a synchronized manner.

. Meanwhile, the server virtual machine 520 in the processor 175 may receive and process position information data that changes according to movement, and may provide the processed data to the first guest virtual machine 530 or the second guest virtual machine 540. Accordingly, instead of 1:1 data communication, 1:N data communication between the virtual machines may be achieved by using the shared memory.

. Meanwhile, the first guest virtual machine 530 and the second guest virtual machine 540 may be driven by different operating systems. Accordingly, even when the plurality of virtual machines are driven by different operating systems, high-speed data communication may be performed.

. Meanwhile, although not illustrated in FIG. 6, the legacy virtual machine 510 may transmit memory data from the memory 140 and Ethernet data by Ethernet communication to the first guest virtual machine 530 and the second guest virtual machines 540 in a synchronized manner by using the shared memory 508 based on the hypervisor 505. That is, 1:N data communication of the memory data or the Ethernet data may be performed. Accordingly, identical data may be transmitted in a synchronized manner.

. Meanwhile, the server virtual machine 520 in the processor 175 may execute supervisory services, such as a system manager, a display manager, and the like.

. Meanwhile, the server virtual machine 520 in the processor 175 may execute systemic services, such as vehicle information service, position information service, camera service, AUTOSAR, Bluetooth communication service, radio service, Wi-Fi service, audio service, touch service, and the like.

. FIG. 7A is a diagram illustrating an example of three virtual machines 420, 420, and 430 operating on a system 400b of FIG. 4.

. Referring to the figure, the server virtual machine 520 and 420 is a Linux-based virtual machine, and may include an input and output server interface 422 for data transmission, and the first guest virtual machine 530 and the second guest virtual machine 540 may include input and output client interfaces 432 and 552 for data communication with the input and output server interface 422.

. For example, the server virtual machine 520 and 420 is required to set up a first shared memory 408a in a hypervisor 405 in order to transmit first data to the first guest virtual machine 430, and to set up a separate second shared memory 408b, different from the first shared memory 408a, in the hypervisor 405 in order to transmit the same first data to the second guest virtual machine 440.

. If a separate shared memory is used for transmitting the same first data as illustrated in FIG. 7A, there is a drawback in that resources are wasted and synchronization is not easy.

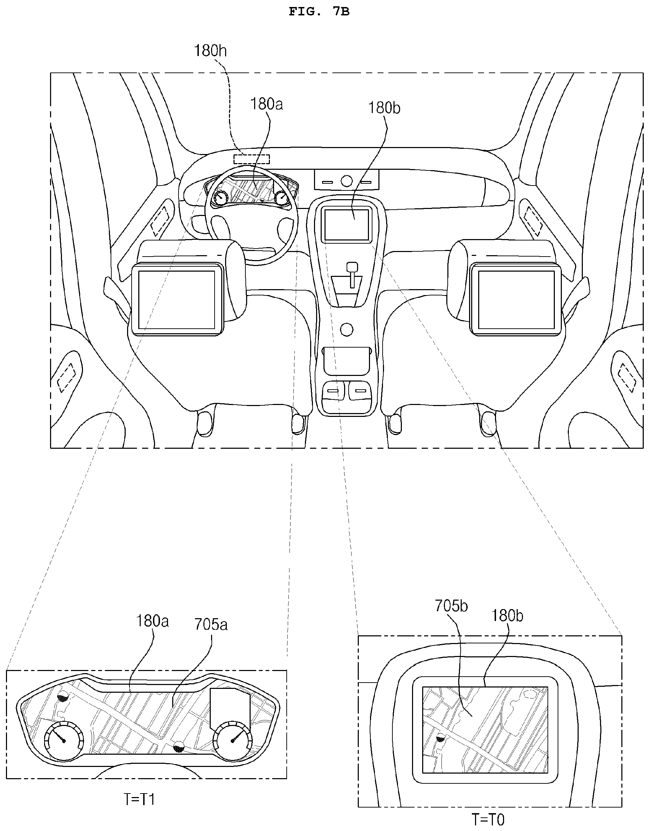

. FIG. 7B illustrates an example in which, by the system 400b of FIG. 7A, the first guest virtual machine 430 displays image data received through the first shared memory 408a on the first display 180a, and the second guest virtual machine 440 displays image data received through the second shared memory 408b on the second display 180b.

. FIG. 7B illustrates that an image 705a displayed on the first display 180a and an image 705b displayed on the second display 180b are not synchronized with each other and that the image 705b displayed on the second display 180b corresponds to a more previous frame than the image 705a displayed on the first display 180a.

. As described above, if the first virtual machine 520 and 420 transmits identical image data based on the separate shared memory as illustrated in FIG. 7A, there is a drawback in that images may not be displayed in a synchronized manner as illustrated in FIG. 7B.

. In order to solve this problem, the present disclosure proposes a scheme for allocating a single shared memory at the time of transmission of identical data. Consequently, 1:N data communication is performed, whereby synchronized data transmission is achieved.

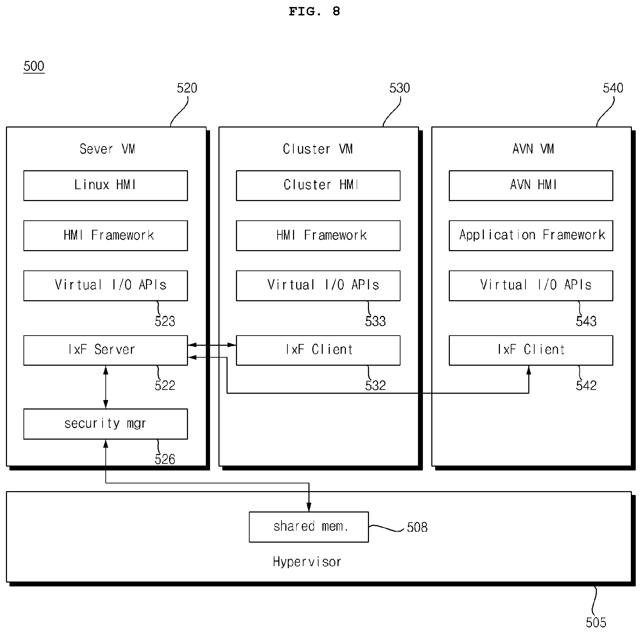

. FIG. 8 is a diagram illustrating an example in which the server virtual machine 520 and the plurality of guest virtual machines 530 and 540 are executed on the hypervisor 505 in the processor 175 of the system 500, and the server virtual machine 520 in the processor 175 may be configured to set up the shared memory 508 based on the hypervisor 505 for transmission of identical data to the first guest virtual machine 530 and the second guest virtual machine 540.

. Accordingly, the plurality of displays 180a and 180b in the vehicle may display identical images in a synchronized manner.

. Meanwhile, high-speed data communication may be performed among the plurality of virtual machines 520, 530, and 540. Further, high-speed data communication may be performed even when the plurality of virtual machines 520, 530, and 540 are driven by different operating systems.

. Meanwhile, the server virtual machine 520 in the processor 175 may transmit data, processed by the server virtual machine 520, to another virtual machine by using a single shared memory 508 instead of allocating memories, the number of which corresponds to the number of virtual machines. Accordingly, instead of 1:1 data communication, 1:N data communication between the virtual machines may be achieved by using the shared memory 508.

. Meanwhile, the server virtual machine 520 in the processor 175 may include the input and output server interface 522 and a security manager 526.

. Meanwhile, the first guest virtual machine 530 and the second guest virtual machine 540 may include input and output client interfaces 532 and 542, respectively. Accordingly, high-speed data communication between the plurality of virtual machines may be performed by using the input and output server interface 522 and the input and output client interfaces 532 and 542.

. The input and output server interface 522 in the first virtual machine 520 may receive requests for transmission of identical data from the respective input and output client interfaces 532 and 542 in the first guest virtual machine 530 and the second guest virtual machine 540, and may transmit shared data to the shared memory 508 through the security manager 526 based thereon.

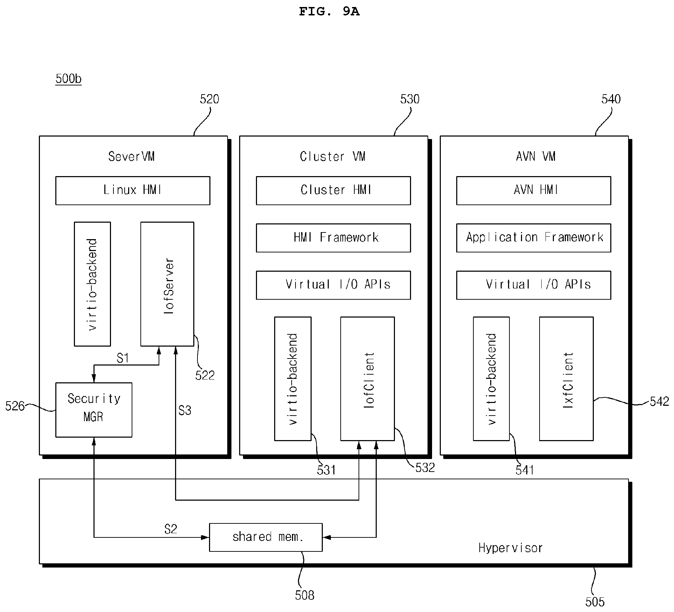

. FIG. 9A is a diagram illustrating in further detail transmission of shared data.

. Referring to the figure, in order to transmit shared data, the input and output server interface 522 in the server virtual machine 520 transmits a request for allocation of the shared memory 508 to the security manager 526 (S1).

. Subsequently, the security manager 526 may allocate the shared memory 508 using the hypervisor 505 (S2), and may write shared data in the shared memory 508.

. Meanwhile, the input and output client interfaces 532 and 542 may transmit a request for connection to the input and output server interface 522 after allocation of the shared memory 508 (S3).

. Meanwhile, after allocation of the shared memory 508, the input and output server interface 522 transmits information regarding the shared memory 508 including key data to the input and output client interfaces 532 and 542 (S4). In this case, the key data may be data for data access.

. That is, after setting up the shared memory 508, the server virtual machine 520 in the processor 175 may transmit information regarding the shared memory 508 to the first guest virtual machine 530 and the second guest virtual machine 540.

. The input and output client interfaces 532 and 542 may access the shared memory 508 based on the received key data (S5), and may copy the shared data from the shared memory 508.

. Accordingly, the first guest virtual machine 530 and the second guest virtual machine 540 may access the shared memory 508, and thus, may share the shared data.

. For example, in the case in which the shared data are image data, the first guest virtual machine 530 and the second guest virtual machine 540 may share the image data, and thus, the plurality of displays 180a and 180b in the vehicle may display the same shared image in a synchronized manner.

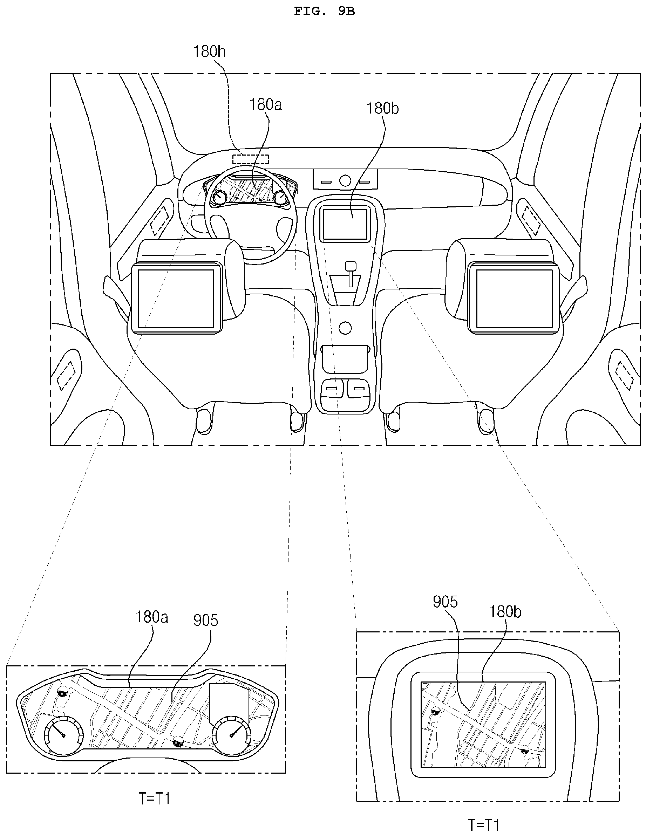

. FIG. 9B illustrates an example in which, by the system 500 of FIG. 9A, the first guest virtual machine 530 displays image data received through the shared memory 508 on the first display 180a, and the second guest virtual machine 540 displays image data received through the shared memory 508 on the second display 180b.

. FIG. 9B illustrates that an image 905 displayed on the first display 180a and an image 905 displayed on the second display 180b are synchronized, such that the same image may be displayed.

. That is, image data processed by the server virtual machine 520 in the processor 175 are transmitted to the first guest virtual machine 530 and the second guest virtual machine 540 through the shared memory 508, and based on the image data, a first image 905 displayed on the first display 180a and a second image 905 displayed on the second display 180b may be identical to each other. Accordingly, the plurality of displays 180a and 180b in the vehicle may display the same images in a synchronized manner. Further, high-speed data communication among the plurality of virtual machines 520, 530, and 540 may be performed.

. FIGS. 10A and 10B are internal block diagrams illustrating various examples of an augmented reality apparatus for a vehicle associated with the present disclosure.

. First, FIG. 10A is an internal block diagram illustrating an example of an augmented reality apparatus for a vehicle (hereinafter referred to as an in-vehicle augmented reality apparatus) associated with the present disclosure.

. Referring to FIG. 10A, an in-vehicle augmented reality apparatus 1000x associated with the present disclosure may include a camera 195, a sensor device 700, a transceiver 120, an ADAS device 1003 configured to detect an object based on camera data from the camera 195, a vehicle network gateway 1006 configured to transmit the detected object to an AR engine Nar in an image projection device 180h, and the image projection device 180h.

. The AR engine Nar in the image projection device 180h may generate a graphical overlay based on the detected object and output the generated graphical overlay.

. However, in the in-vehicle augmented reality apparatus 1000x, the ADAS device 1003 and the image projection device 180h are spaced apart from each other, and the detected object information and the like are transmitted through wired or wireless communication by the vehicle network gateway 1006, thereby causing a significant delay.

. Particularly, when a delay occurs while the in-vehicle augmented reality apparatus 1000x provides guide information related to vehicle traveling, the delay causes safety problems.

. Next, FIG. 10B is an exemplary internal block diagram of an in-vehicle augmented reality apparatus associated with the present disclosure.

. Referring to FIG. 10B, an in-vehicle augmented reality apparatus 1000y associated with the present disclosure may include a camera 195, a sensor device 700, a transceiver 120, an ADAS ECU 1003a configured to detect an object based on camera data from the camera 195, a sensor ECU 1003b configured to process sensor data from the sensor device 700 and to output the processed data, a vehicle network gateway 1006 configured to transmit the detected object data from the ADAS ECU 1003a or the sensor data from the sensor ECU 1003b to an AR engine Nar in an image projection device 180h, an AR camera 195b, and an image projection device 180h.

. The AR engine Nar in the image projection device 180h may generate a graphical overlay based on the detected object and output the generated graphical overlay.

. However, in the in-vehicle augmented reality apparatus 1000y, the ADAS ECU 1003a and the image projection device 180h are spaced apart from each other, and the detected object information and the like are transmitted through wired or wireless communication by the vehicle network gateway 1006, thereby causing a significant delay.

. Particularly, when a delay occurs while the in-vehicle augmented reality apparatus 1000y provides guide information related to vehicle traveling, the delay causes safety problems.

. Accordingly, the present disclosure proposes a scheme for reducing the delay when providing guide information related to vehicle traveling. Particularly, the present disclosure proposes a scheme for rapidly providing an augmented reality-based graphical overlay according to a vehicle speed.

. To this end, the signal processing device 170 according to an embodiment of the present disclosure executes a hypervisor 505 (see FIG. 11) and a plurality of virtual machines 520 to 540 (see FIG. 11) on the hypervisor 505, and transmits data through a shared memory 508 (see FIG. 11) based on the hypervisor 505, which will be described below with reference to FIG. 11.

. FIG. 11 is an exemplary internal block diagram illustrating an augmented reality apparatus for a vehicle according to an embodiment of the present disclosure.

. Referring to FIG. 11, an in-vehicle augmented reality (AR) apparatus 1000 according to the embodiment of the present disclosure includes at least one camera 195 and a signal processing device 170.

. Meanwhile, the in-vehicle augmented reality apparatus 1000 according to the embodiment of the present disclosure may further include an image projection device 180h.

. Meanwhile, the in-vehicle augmented reality apparatus 1000 according to the embodiment of the present disclosure may further include a plurality of displays 180a and 180b.

. Meanwhile, the in-vehicle augmented reality apparatus 1000 according to the embodiment of the present disclosure may further include a sensor device 700 and a transceiver 120.

. Meanwhile, the signal processing device 170 according to the embodiment of the present disclosure may receive a signal from the camera 195, the sensor device 700, or the transceiver 120, and may perform signal processing to output an image signal to a first display 180a, a second display 180b, or the image projection device 180h.

. The signal processing device 170 according to the embodiment of the present disclosure may include a memory 140 configured to store map data, and a processor 175 configured to generate a graphical overlay-based frame data based on camera data from the camera 195, or the map data, or the sensor data from the sensor device 700.

. Meanwhile, based on speed data from the sensor device 700, if a vehicle speed is a first speed V1, the processor 175 outputs a graphical overlay at a first frame rate FRa (FIG. 18), and if the vehicle speed is a second speed V2 higher than the first speed V1, the processor 175 outputs a graphical overlay at a second frame rate FRb (FIG. 18) higher than the first frame rate FRa. Accordingly, an augmented reality-based graphical overlay may be rapidly provided according to a vehicle speed.

. Meanwhile, the processor 175 may execute a plurality of virtual machines 520 to 540 on an executed hypervisor 505, may detect an object from the camera data through a first engine Nad executed in one of the plurality of virtual machines 520 to 540, may transmit the detected object to a second engine Nar through the shared memory 508 based on the hypervisor 505, and may generate a graphical overlay-based frame data based on the detected object through the second engine Nar executed in some of the plurality of virtual machines 520 to 540 and output the generated data.

. Accordingly, the augmented reality-based graphical overlay may be rapidly and stably provided. Particularly, even when the first engine Nad and the second engine Nar are executed in different virtual machines, the augmented reality-based graphical overlay may be rapidly and stably provided by sharing the detected object using the shared memory.

. In this case, the graphical overlay may include vehicle speed information, vehicle heading direction information, a preceding vehicle object, an indicator of a distance to the preceding vehicle, and the like.

. Accordingly, safety information and the like for a driver during vehicle driving may be stably provided.

. Meanwhile, as described above, the processor 175 may execute the hypervisor 505, and may set the shared memory 508 based on the executed hypervisor 505.

. Meanwhile, the processor 175 may execute the first engine Nad based on the camera data from the camera 195 and the sensor data from the sensor device 700. In this case, the first engine Nad may be an Advanced Driver Assistance System (ADAS) engine.

. By executing the ADAS engine Nad, the processor 175 may detect objects at the front, rear, and sides of the vehicle.

. Particularly, by executing the ADAS engine Nad, the processor 175 may detect a preceding vehicle object or a lane object in front of the vehicle, and the like.

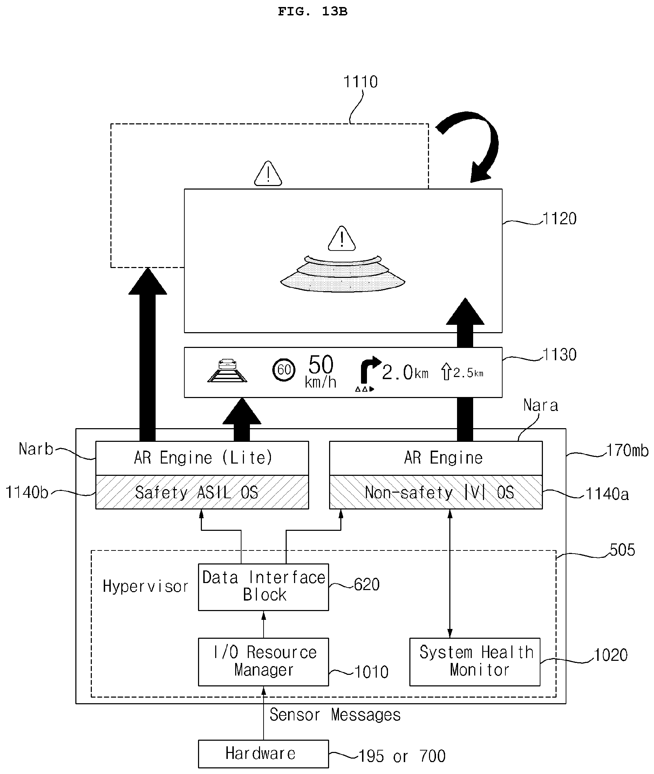

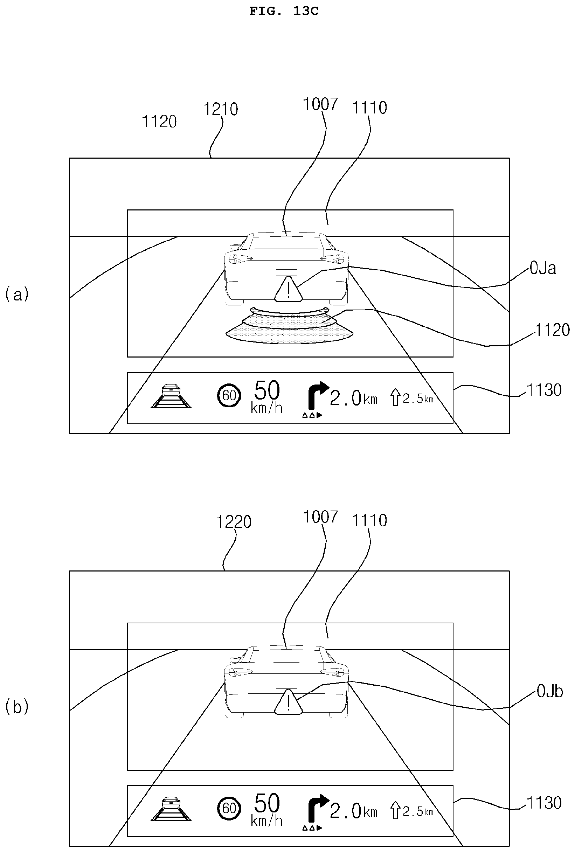

. Meanwhile, the processor 175 may execute the second engine Nar based on a detected object 1007 (see FIG. 13) through the shared memory 508 based on the hypervisor 505. In this case, the second engine Nar may be an Augmented Reality (AR) engine.

. By executing the AR engine Nar, the processor 175 may generate and output a graphical overlay 1210.

. Meanwhile, the processor 175 may execute a third engine Nna based on the sensor data from the sensor device 700 and the map data from the memory 140. In this case, the third engine Nna may be a navigation engine Nna.

. By executing the navigation engine Nna, the processor 175 may generate guide information related to vehicle traveling and the like.

. Particularly, by executing the navigation engine Nna, the processor 175 may generate guide information related to vehicle traveling.

. In this case, the guide information related to vehicle traveling may include vehicle speed information and vehicle heading direction information.

. Meanwhile, the processor 175 may execute a second engine Narb based on the camera data from the camera 195, or the map data from the memory 140, or the sensor data from the sensor device 700.

. For example, by executing the second engine Narb based on the camera data from the camera 195, or the map data from the memory 140, or the sensor data from the sensor device 700, the processor 175 may generate graphical overlay-based frame data including vehicle speed information, vehicle heading direction information, a preceding vehicle object, or an indicator of a distance to the preceding vehicle.

. Meanwhile, by executing the first engine Nad, the processor 175 may detect a preceding vehicle object or a lane object in front of the vehicle, and the like.

. Meanwhile, the processor 175 may execute an AR application CAa for the first display 180a, the second display 180b, or the image projection device 180h.

. Particularly, the processor 175 may execute the AR application CAa for the image projection device 180h.

. Meanwhile, the processor 175 may superimpose the graphical overlay on the detected object. Accordingly, the augmented reality-based graphical overlay may be rapidly provided.

. In the drawing, an example is illustrated in which the processor 175 executes the plurality of virtual machines 520 to 540 on the hypervisor 505.

. A server virtual machine 520 among the plurality of virtual machines 520 to 540 may detect an object from the camera data through the first engine Nad, and a guest virtual machine 530 or 540 among the plurality of virtual machines 520 to 540 may generate graphical overlay-based frame data based on the detected object through the second engine Nar and output the generated data.

. Meanwhile, a first guest virtual machine 530 may operate for the first display 180a, and a second guest virtual machine 540 may operate for the second display 180b or the image projection device 180h.

. Meanwhile, the second guest virtual machine 540 may execute the AR application CAa and the second engine Nar.

. Meanwhile, the second guest virtual machine 540 may receive the object data, detected using the first engine Nad, through the shared memory 508 and may generate a graphical overlay based on the detected object through the second engine Nar and output frame data based on the generated graphical overlay to the image projection device 180h. Accordingly, an augmented reality-based graphical overlay may be rapidly provided through the image projection device 180h.

. Meanwhile, as illustrated herein, the graphical overlay generated by the second engine Nar may be provided to the AR application CAa, and the AR application CAa may provide the frame data based on the graphical overlay to the image projection device 180h. Accordingly, an augmented reality-based graphical overlay may be rapidly provided through the image projection device 180h.

. Meanwhile, the server virtual machine 520 may execute the first engine Nad and the third engine Nna.

. For example, the server virtual machine 520 may generate guide information related to vehicle traveling based on the sensor data from the second device 700 and the map data from the memory 140.

. The second engine Nar in the second guest virtual machine 540 may receive the generated guide information related to vehicle traveling and the detected object data through the shared memory 508, and may generate graphical overlay-based frame data based on the guide information related to vehicle traveling and the detected object data and output the generated data. Accordingly, an augmented reality-based graphical overlay including the guide information related to vehicle traveling may be rapidly provided.

. Meanwhile, the first engine Nad, the second engine Nar, and the third engine Nna may be referred to as an ADAS processor Nad, an augmented reality processor Nar, and a navigation processor Nna, respectively.

. Meanwhile, unlike FIG. 11, three guest virtual machines instead of two may also be executed.

. That is, it is also possible that the first guest virtual machine 530, the second guest virtual machine 540, and a third virtual machine (not shown) operate for the first display 180a, the second display 180b, and the image projection device 180h, respectively, and the second engine Nar is executed in the third guest virtual machine (not shown).

. Meanwhile, unlike FIG. 11, it is also possible that while three guest virtual machines instead of two are executed, the second engine Nar is executed in the second guest virtual machine 540, and graphical overlay-based frame data output from the second engine Nar is output to the second display 180b.

. Meanwhile, it is also possible that the graphical overlay generated by the second engine Nar is stored in the shared memory 508, and the graphical overlay is displayed on the second display 180b and the image projection device 180h in a synchronized manner.

. Meanwhile, unlike FIG. 11, the third engine Nna may also be executed in the guest virtual machine instead of the server virtual machine 520.

. The guest virtual machine 530 or 540 among the plurality of virtual machines 520 to 540 may generate guide information related to vehicle traveling based on the sensor data from the sensor device 700 and the map data from the memory 140 by using the third engine Nna.

. The generated guide information related to vehicle traveling may be stored in the shared memory 508, and the second engine Nar may receive the guide information related to vehicle traveling through the shared memory 508, and based on the guide information related to vehicle traveling, the second engine Nar may generate frame data based on an augmented reality-based graphical overlay which includes the guide information related to vehicle traveling, and may output the frame data.

. Meanwhile, the processor 175 may execute the plurality of virtual machines 520 to 540 on an executed hypervisor 505, may execute the first engine Nad in one of the plurality of virtual machines 520 to 540, may execute the second engine Nar in another one of the plurality of virtual machines 520 to 540, and may transmit frame data based on an object to the second engine Nar through the shared memory 508 based on the hypervisor 505. Accordingly, an augmented reality-based graphical overlay may be rapidly and stably provided.

. Meanwhile, the server virtual machine 520 among the plurality of virtual machines 520 to 540 may execute the first engine Nad and the guest virtual machine 530 or 540 among the plurality of virtual machines 520 to 540 may execute the second engine Nar. Accordingly, an augmented reality-based graphical overlay may be rapidly and stably provided.

. Meanwhile, unlike FIG. 11, the first engine NAad and the second engine Nar may also be executed in one same virtual machine among the plurality of virtual machines 520 to 540.

. For example, the first engine NAad and the second engine Nar may be executed together in the server virtual machine 520.

. In another example, the first engine NAad and the second engine Nar may be executed together in the second guest virtual machine 540.

. The processor 175 in the signal processing device 170 according to another embodiment of the present disclosure executes a plurality of virtual machines 520 to 540 on an executed hypervisor 505, detects an object from camera data through a first engine Nad executed in some of the plurality of virtual machines 520 to 540, generates graphical overlay-based frame data based on the detected object through a second engine Nar, and transmits the generated graphical overlay 1210 to another virtual machine among the plurality of virtual machines 520 to 540 through the shared memory 508 based on the hypervisor 505, which will be described below with reference to FIG. 12.

. FIG. 12 is an internal block diagram illustrating an augmented reality apparatus for a vehicle according to another embodiment of the present disclosure.

. Referring to FIG. 12, an in-vehicle augmented reality apparatus 1000b according to another embodiment of the present disclosure is similar to the in-vehicle augmented reality apparatus 1000 of FIG. 11, but is different in that the second engine Nar is executed in the server virtual machine 520.

. That is, the server virtual machine 520 may execute the first engine Nad, the second engine Nar, and the third engine Nna.

. As illustrated in FIG. 12, the first guest virtual machine 530 among the plurality of virtual machines 520 to 540 may operate for the first display 180a, and the second guest virtual machine 540 among the plurality of virtual machines 520 to 540 may operate for the second display 180b or the image projection device 180h.

. Meanwhile, the server virtual machine 520 among the plurality of virtual machines 520 to 540 may detect an object from camera data through the first engine Nad, and may generate graphical overlay-based frame data based on the detected object 1007 through the second engine Nar.

. Further, the server virtual machine 520 may transmit the generated graphical overlay to an augmented reality application CAa, executed in the guest virtual machine 530 or 540, through the shared memory 508.

. For example, the server virtual machine 520 may transmit the generated graphical overlay to the second guest virtual machine 540 through the shared memory 508.

. Meanwhile, the second guest virtual machine 540 may control the graphical overlay-based frame data to be output to at least one of the second display 180b or the image projection device 180h through the running augmented reality application CAa. Accordingly, an augmented reality-based graphical overlay may be rapidly provided.

. In another example, the server virtual machine 520 may transmit the generated graphical overlay to the first guest virtual machine 530 through the shared memory 508.

. Meanwhile, the first guest virtual machine 530 may control the graphical overlay-based frame data to be output to the first display 180a through a running augmented reality application (not shown). Accordingly, an augmented reality-based graphical overlay may be rapidly provided.

. Meanwhile, the server virtual machine 520 may generate guide information related to vehicle traveling based on the sensor data from the sensor device 700 and the map data from the memory 140 by using the third engine Nna, and the second engine Nar may generate the graphical overlay-based frame data based on the generated guide information related to vehicle traveling and the detected object 1007 and output the generated frame data.

. Further, the server virtual machine 520 may transmit a graphical overlay, including the guide information related to vehicle traveling, to the augmented reality application CAa, executed in the guest virtual machine 530 or 540, through the shared memory 508.

. Accordingly, the graphical overlay, including the guide information related to vehicle traveling, may be output to at least one of the first display 180a, the second display 180b, and the image projection device 180h.

. Meanwhile, unlike FIG. 12, three guest virtual machines instead of two may also be executed.

. For example, the first guest virtual machine 530, the second guest virtual machine 540, and the third virtual machine (not shown) may operate for the first display 180a, the second display 180b, and the image projection device 180h, respectively.

. Meanwhile, unlike FIG. 12, the first engine Nad and the second engine Nar may also be executed together in the second guest virtual machine 540.

. That is, the processor 175 may execute the plurality of virtual machines 520 to 540 on the executed hypervisor 505, and may execute the first engine Nad and the second engine Nar in one of the plurality of virtual machines 520 to 540. Accordingly, an augmented reality-based graphical overlay may be rapidly provided.

. FIGS. 13A to 13C are diagrams referred to in the description of the signal processing device of FIGS. 11 and 12.

. First, FIG. 13A is a diagram illustrating an example of the signal processing device of FIGS. 11 and 12.

. Referring to FIG. 13A, a signal processing device 170ma may execute a first augmented reality engine Nara on a first operating system 1140a, and may execute a second augmented reality engine Narb on a second operating system 1140b different from the first operating system 1140a.

. For example, the signal processing device 170ma may execute the second guest virtual machine 540 based on the first operating system 1140a and execute the first augmented reality engine Nara on the first operating system 1140a, and may execute the server virtual machine 520 based on the second operating system 1140b and execute the second augmented reality engine Narb on the second operating system 1140b.

. Meanwhile, the first operating system 1140a may be a Non-safety IVI OS, and the second operating system 1140b may be a safety ASIL OS.

. Meanwhile, the second operating system 1140b may be a Lite version of the first augmented reality engine Nara.

. As described above, the first augmented reality engine Nara and the second augmented reality engine Narb are executed separately, such that when operation of the first augmented reality engine Nara is stopped unexpectedly, it is possible to rapidly restore the first augmented reality engine Nara by using the second augmented reality engine Narb. Accordingly, the augmented reality-based overlay may be stably and rapidly provided.

. Meanwhile, the input and output resource manager 1010 executed based on the hypervisor 505 may receive the camera data or the sensor data from the camera 195 or the sensor device 700, respectively, and may provide the camera data or the sensor data to the first engine Nara or the second engine Narb.

. Meanwhile, when providing the camera data or the sensor data to the second engine Nar which is an augmented reality engine, the input and output resource manager 1010 executed based on the hypervisor 505 may provide the data to the first augmented reality engine Nara and the second augmented reality engine Narb.

. Meanwhile, the system monitor 1020 executed based on the hypervisor 505 may detect interruption of the first augmented reality engine Nara or detect restoration of the first augmented reality engine Nara.

. For example, the system monitor 1020 may transmit a heartbeat signal to the first augmented reality engine Nara, and based on whether a response signal is received in response to the heartbeat signal, the system monitor 1020 may determine whether operation of the first augmented reality engine Nara is stopped or restored.

. In another example, while the operation of the first augmented reality engine Nara is stopped, if the system monitor 1020 transmits a heartbeat signal to the first augmented reality engine Nara and receives a response signal from the first augmented reality engine Nara within a predetermined period of time, the system monitor 1020 may determine that the operation of the first augmented reality engine Nara is restored.

. Meanwhile, in the case in which the system monitor 1020 executed in the hypervisor 505 detects interruption of the first augmented reality engine Nara, the second augmented reality engine Narb may generate and output the second graphical overlay 1220 by using the input and output resource manager 1010 based on the hypervisor 505.

. Meanwhile, in the case in which the system monitor 1020 executed in the hypervisor 505 detects restoration of the first augmented reality engine Nara, the second augmented reality engine Narb may transmit data related to the second graphical overlay 1220 to the first augmented reality engine Nara by using the input and output resource manager 1010. Accordingly, the augmented reality-based first graphical overlay 1210 or second graphical overlay 1210 may be rapidly provided.

. Meanwhile, FIG. 13A illustrates an example in which a first data interface 620a and a second data interface 620b are executed on the first operating system 1140a and the second operating system 1140b, respectively, but other operations are also possible.

. That is, it is also possible that a single data interface is included in the signal processing device, which will be described below with reference to FIG. 13B.

. Next, FIG. 13B is a diagram illustrating another example of the interior of the signal processing device of FIGS. 11 and 12.

. Referring to FIG. 13B, unlike FIG. 13A, a signal processing device 170mb may execute a data interface 620 based on the hypervisor 505, and the data interface 620 may transmit the camera data from the camera 195, or the map data from the memory 140, or the sensor data from the sensor device 700 through the input and output resource manager 1010 to the first augmented reality engine Nara and the second augmented reality engine Narb.

. As described above, unlike FIG. 13A, by using a single data interface, the first augmented reality engine Nara and the second augmented reality engine Narb may operate together, and only the control authority may be assigned to one of the engines.

. That is, the first augmented reality engine Nara may be executed on the first operating system 1140a, the second augmented reality engine Narb may be executed on the second operating system 1140b different from the first operating system 1140a, the data interface may be executed based on the hypervisor 505, the first augmented reality engine Nara may be executed on the first operating system 1140a, and the second augmented reality engine Narb may be executed on the second operating system 1140b.

. Accordingly, an augmented reality-based overlay may be stably and rapidly provided under any circumstances.

. FIG. 13C is a diagram illustrating an example of a first graphical overlay 1210 and a second graphical overlay 1220.

. Referring to FIG. 13C, the first augmented reality engine Nara may generate and output the first graphical overlay 1210 having a first layer 1130, which includes vehicle speed information and vehicle heading direction information, and the second layer 1120 which includes a preceding vehicle object and an indicator of a distance to the preceding vehicle, as illustrated in (a) of FIG. 13C.

. Meanwhile, the second augmented reality engine Narb may generate and output the second graphical overlay 1220 having the first layer 1130, which includes vehicle speed information and vehicle heading direction information, and a third layer 1110 which includes a preceding vehicle object, as illustrated in (b) of FIG. 13C.

. In the second graphical overlay 1220, the indicator of the distance to the preceding vehicle is omitted, and thus includes less data than the first graphical overlay 1210.

. That is, the first graphical overlay 1210 may have the first layer 1130 and the second layer 1120, and the second graphical overlay 1220 may have the first layer 1130 and the third layer 1110 including less data than the second layer 1120.

. Accordingly, the augmented reality-based overlay may be stably provided even when the first augmented reality engine Nara is stopped.

. Meanwhile, the first graphical overlay 1210 of FIG. 13C may be the graphical overlay of FIGS. 11 and 12.

. Alternatively, the second graphical overlay 1220 of FIG. 13C may be the graphical overlay of FIGS. 11 and 12.

. FIG. 14 is an exemplary internal block diagram of a processor of FIGS. 11 and 12.

. Referring to FIG. 14, the processor 175 may include a data interface NTa configured to receive camera data from the camera 195, or map data from the memory 140, or sensor data from the sensor device 700, and an augmented reality (AR) engine Nar configured to generate an augmented reality-based overlay based on the image from the camera 195 and to output the generated augmented reality-based overlay.

. The AR engine Nar may include the first augmented reality engine Nara and the second augmented reality engine Narb, as illustrated in FIG. 14A.

. Meanwhile, the AR engine Nar in the processor 175 may execute sensor fusion based on the camera data from the camera 195, or the map data, or the sensor data from the sensor device 700, and may perform geometric modeling based on a result of performing the sensor fusion, and may perform visualization based on a result of the modeling.

. To this end, the AR engine Nar in the processor 175 may include a sensor fusion processor 630 configured to perform sensor fusion based on the camera data, the map data, or the sensor data, a geometric modeling processor 640 configured to perform geometric modeling based on a result of performing the sensor fusion, and a visualization processor 650 configured to perform visualization based on a result of the modeling.

. A Network Protocol block 622 in the data interface NTa may implement network protocols of various vehicle sensor data transmitted to the AR engine Nar. In this case, the network protocols may be protocols such as SOME/IP, CAN, Ethernet, and the like.

. A Message Encoder/Decoder 624 in the data interface NTa may decode encoded binary packets, which are regularly received from the sensor device 700 or a gateway (not shown), and may extract a numeric value which is an original message value.

. Meanwhile, a Message Encoder/Decoder 624 in the data interface NTa may add a timestamp of the received time to the decoded data, and may transmit the data, having the timestamp added thereto, to the sensor fusion processor 630.

. A Configurations block 626 in the data interface NTa may manage a life cycle of the AR application CAa, may set which window will display AR content, or may manage a window system, an event-driven configuration setting message, or an AR function ON/OFF configuration setting, or may turn on or off augmented reality-based graphical overlays, or may manage a Light/Dark Mode of a graphical user interface, or may change a color tone of an augmented reality lane carpet.

. The sensor fusion processor 630 receives decoded, Time-tagged sensor data from the data interface NTa.

. A Coordinate System Conversion Block 632 in the sensor fusion processor 630 transforms coordinates of all input sensor messages into a vehicle reference coordinate system by using a transformation matrix.

. An Ego-vehicle State Prediction Block 634 in the sensor fusion processor 630 may compensate for latency in each sensor data.

. To this end, the Ego-vehicle State Prediction Block 634 in the sensor fusion processor 630 may remove noise from time-series sensor data and perform Kalman filtering and the like.

. A Vehicle Motion Stabilization Block 635 in the sensor fusion processor 630 may compensate for vehicle motion caused by uneven surfaces on the road and vehicle suspension.

. Meanwhile, a Sensor Latency Constants Block 637 in the sensor fusion processor 630 may transmit center of gravity position offset data from the vehicle reference coordinate system to the Vehicle Motion Stabilization Block.

. Meanwhile, result data of the Ego-vehicle State Prediction Block 634 and result data of the Vehicle Motion Stabilization Block 635 may be summed together by an adder 637 to be output to the geometric modeling processor 640.

. A projective transform Block 642 in the geometric modeling processor 640 receives the result data from the sensor fusion processor 630 and performs transformation for image projection.

. A driver viewpoint adjustment Block 644 in the geometric modeling processor 640 may detect the position of a driver's eyes based on an image from an in-vehicle camera, and may adjust a projection position based on the position of the eyes.

. Meanwhile, an occlusion clipping Block 646 in the geometric modeling processor 640 may perform clipping on the projected image.

. A factory calibration data Block 646 in the geometric modeling processor 640 may provide calibration data to the projective transform Block 642 or the river viewpoint adjustment Block 644, or the occlusion clipping Block 646.

. The visualization processor 650 may receive the result data from the geometric modeling processor 640, and may output various images based on augmented reality.

. A context recognition Block 651 in the visualization processor 650 may receive the result data from the geometric modeling processor 640, and may perform context recognition.

. A scene composition Block 653 in the visualization processor 650 may perform scene composition based on the data from the context recognition Block 651.

. A HUD undistort Block 654 in the visualization processor 650 may receive image data, which is signal-processed data with reduced distortion, from the scene composition Block 653.

. A Third-party HMI frameworks Block 655 in the visualization processor 650 may add framework data to the data from the context recognition Block 651, and may output the added data.

. A UI/UX graphic assets Block 657 in the visualization processor 650 may provide data for UI/UX of the output image data.

. A Warping table Block 659 in the visualization processor 650 may provide Warping table data to units in the visualization processor 650.

. FIGS. 15A to 15G are diagrams referred to in the description of FIG. 14.

. FIG. 15A is a diagram illustrating an AR rendering speed controller 1717 and a table 1705.

. Referring to FIG. 15A, the AR rendering speed controller 1717 in the processor 175 may operate in the second engine Nar.

. The AR rendering speed controller 1717 may change an AR rendering speed based on a current ADAS operating speed of the first engine Nad which is an ADAS engine, and based on a current AR rendering speed associated with the second engine Nar.

. Meanwhile, the table 1705 may store data related to the ADAS operating speed or the AR rendering speed.

. Meanwhile, the AR rendering speed controller 1717 may output the AR rendering speed value, which is changed based on the current ADAS operating speed of the first engine Nad that is the ADAS engine and the current AR rendering speed associated with the second engine Nar, and a latency variation value. Accordingly, a graphical overlay may be rapidly output while reducing a difference between the ADAS operating speed and the AR rendering speed.

. Meanwhile, the ADAS operating speed may be an ADAS frame rate, and the AR rendering speed may also correspond to an AR frame rate.

. For example, while a ratio of the AR frame rate to the ADAS frame rate is constant, the AR rendering speed controller 1717 may control a delay or latency to be reduced as the AR frame rate increases.

. In another example, while the ADAS frame rate and the AR frame rate are equal, the AR rendering speed controller 1717 may control a delay or latency to be reduced as the AR frame rate increases.

. In yet another example, while a ratio of the AR frame rate to the ADAS frame rate is an integer multiple, the AR rendering speed controller 1717 may control a delay or latency to be reduced as the AR frame rate increases.

. Meanwhile, the AR rendering speed controller 1717 may control the ADAS frame rate or the AR frame rate to be changed according to a vehicle speed.

. For example, if the vehicle speed is a first speed, the AR rendering speed controller 1717 may control the AR frame to be output at a first frame rate, and if the vehicle speed is a second speed higher than the first speed, the AR rendering speed controller 1717 may control the AR frame to be output at a second frame rate greater than the first frame rate. Accordingly, a graphical overlay may be output with reduced delay.

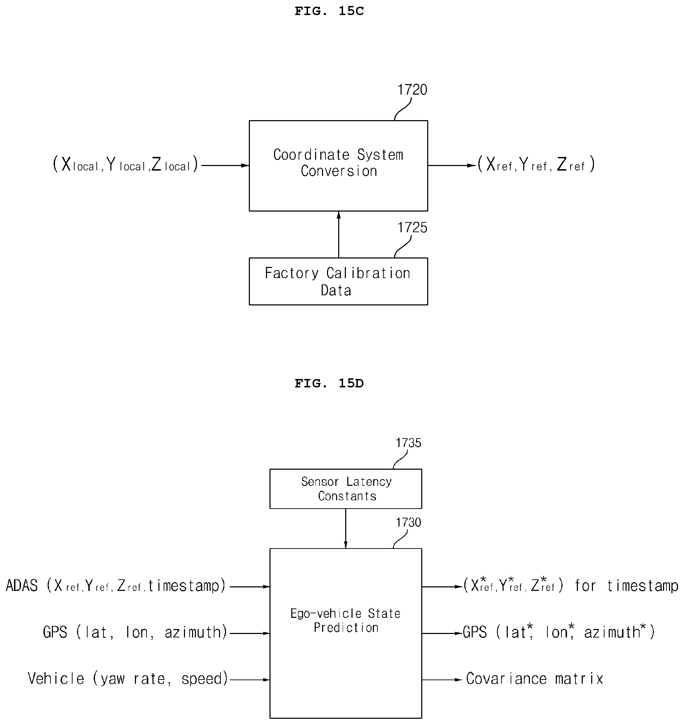

. FIGS. 15B and 15C are diagrams referred to in the description of operation of the coordinate System Conversion Block 632.

. Referring to FIG. 15B, vehicle sensors each have their own local coordinate system. In this case, the local coordinate system may be a sensor-centric XYZ coordinate system.

. Meanwhile, coordinate transformation is required for transforming the sensor-centric coordinate system to a coordinate system centered on the rear axle of a vehicle.

. Meanwhile, camera data of the camera 195 may have a camera coordinate system, and a coordinate system of the image projection device 180h may have an imaginary coordinate system.

. Accordingly, coordinate transformation is required for matching the camera coordinate system of the camera data and the imaginary coordinate system of the image projection device 180h.

. For the coordinate transformation, a matrix operation may be performed as illustrated in FIG. 15C.

. That is, Coordinate System Conversion 1720 in the coordinate System Conversion Block 632 may perform coordinate transformation by performing a matrix operation based on a transformation matrix from Factory Calibration Data 1725.

. FIG. 15D is a diagram referred to in the description of operation of the Ego-vehicle State Prediction Block 634.

. Referring to FIG. 15D, camera data or the sensor data each have their own latency, such that the second engine Nar, which is the AR engine, desirably compensates for the inherent latency time of the camera 195 or the sensor device 700 in order to reduce a delay error.

. To this end, Ego-vehicle State Prediction 1730 in the Ego-vehicle State Prediction Block 634 may perform operation using Sensor Latency Constants 1735.

. Particularly, the Ego-vehicle State Prediction 1730 may perform Kalman filtering based on ADAS data, GPS data, vehicle direction, speed data, etc., and after performing the filtering, may output data in which noise or latency time is compensated.

. That is, the Ego-vehicle State Prediction 1730 may output ADAS data, GPS data, vehicle direction, speed data in which noise or latency time is compensated.

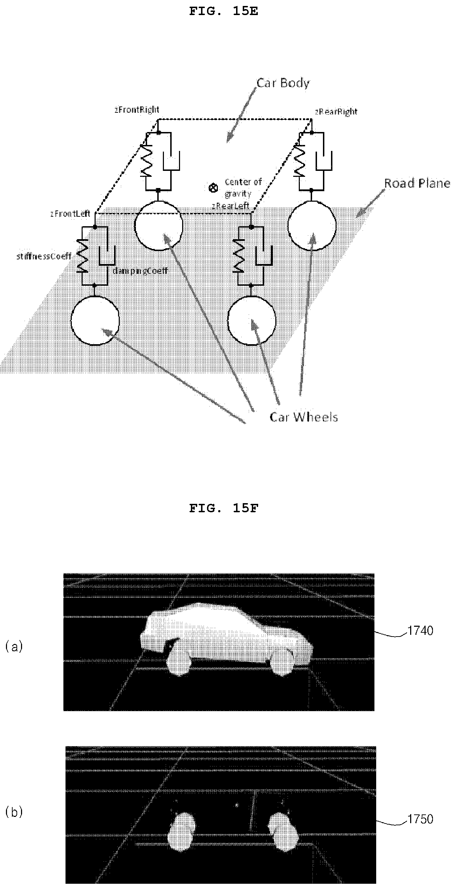

. FIGS. 15E to 15G are diagrams referred to in the description of operation of the Vehicle Motion Stabilization block 635.

. Referring to FIGS. 15E to 15G, if there are many bumps or uneven surfaces on the road, a vehicle vibrates up and down, such that due to the vehicle motion, a graphical overlay output from the second engine Nar, which is the AR engine, may not be matched with a real image.

. Accordingly, as illustrated in FIG. 15E, the Vehicle Motion Stabilization Block 635 performs modeling of vehicle shudder or vibration caused by vehicle suspension (spring) installed on four wheel axles, and predicts the vehicle vibration.

. Meanwhile, stiffness and damping coefficient of the suspension on each wheel axle may be set as calibration data.

. As shown in an image 1740 of (a) of FIG. 15F, the Vehicle Motion Stabilization Block 635 may perform operation based on data of a gyro sensor in the sensor device 700, and may perform compensation as shown in an image 1745 of (b) of FIG. 15F.

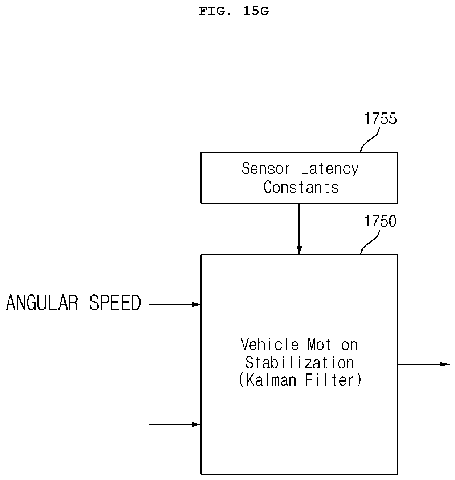

. That is, as illustrated in FIG. 15G, the Vehicle Motion Stabilization Block 635 includes a Vehicle Motion Stabilization processor 1750, and may perform operation based on the Sensor Latency Constants 1755, angular speed data of the gyro sensor in the sensor device 700, and data transformed by the Coordinate System Conversion Block 632.

. Further, the Vehicle Motion Stabilization Block 635 may calculate and output a position of the graphical overlay which is output from the image projection device 180h, etc., and in which a vertical vibration of the vehicle is reflected. Accordingly, the graphical overlay may be output stably with improved visibility.

. FIG. 16 is a diagram illustrating a delay between a detected object and a graphical overlay.

. Referring to FIG. 16, (a) illustrates an example of a front image 1600 based on camera data acquired by the camera 195.

. The processor 175 may detect an object based on the camera data and may output a preceding vehicle object 1620 and a graphical overlay 1610 generated based on the preceding vehicle object 1620.

. In FIG. 16, (a) illustrates an example in which there is almost no delay between the vehicle object 1620 and the graphical overlay 1610.

. Meanwhile, (b) of FIG. 16 illustrates another example of a front image 1600b based on camera data acquired by the camera 195.

. The processor 175 may detect an object based on the camera data and may output a preceding vehicle object 1620b and a graphical overlay 1610 generated based on the preceding vehicle object 1620b.

. In FIG. 16, (b) illustrates an example in which a significant delay ΔE occurs between the vehicle object 1620b and the graphical overlay 1610.

. In FIG. 16, (c) is a diagram referred to in the description of (b) of FIG. 16.

. Referring to (c) of FIG. 16, the vehicle object 1620b is detected at a time Tobs, and then, due to delay elements, such as transmission of the vehicle object 1620b, prediction, etc., the graphical overlay 1610 may be detected at a time Tf+k.

. As illustrated in (b) and (c) of FIG. 16, the delay ΔE between the vehicle object 1620b and the graphical overlay 1610 may be expressed by the following Equation 1.

.

$$[Equation\ 1]$$

$$\Delta E = \Delta s + \Delta d + k\Delta f,$$

where $\Delta s$ denotes a system latency and a constant, k denotes a ratio between frame rates of the ADAS engine and the AR engine, $\Delta f$ denotes a time interval of the frame rate of the AR engine, and $\Delta d$ denotes synchronization latency of the ADAS engine and the AR engine.

. Accordingly, the present disclosure proposes a scheme for reducing $\Delta d + k\Delta f$, except the constant $\Delta s$, which will be described below with reference to FIG. 17 and subsequent figures.

. FIG. 17 is a flowchart illustrating operation of a signal processing device according to an embodiment of the present disclosure.

. Referring to FIG. 17, the processor 175 in the signal processing device 170 receives camera data from the camera 195 (S1710).

. The processor 175 outputs ADAS frame data based on the camera data from the camera 195 (S1720).

. For example, the processor 175 may execute a plurality of virtual machines 520 to 540 on an executed hypervisor 505, and may detect an object from the camera data through the first engine Nad executed in one of the plurality of virtual machines 520 to 540.

. Meanwhile, the processor 175 in the signal processing device 170 receives speed data from the sensor device 700 (S1730).

. Then, the processor 175 may change a frame rate of the AR frame data based on the speed data from the sensor device 700 and may output the changed frame rate (S1740).

. For example, if the vehicle speed is a first speed V1, the processor 175 outputs a graphical overlay at a first frame rate FRa, and if the vehicle speed is a second speed V2 higher than the first speed V1, the processor 175 outputs a graphical overlay at a second frame rate FRb higher than the first frame rate FRa. Accordingly, an augmented reality-based graphical overlay may be rapidly provided according to a vehicle speed.

. Meanwhile, the processor 175 may execute the second engine Nar for outputting the AR frame data.

. The second engine Nar may be executed in some of the plurality of virtual machines 520 to 540.

. FIGS. 18 to 20C are diagrams referred to in the description of FIG. 17.

. First, FIG. 18 is a diagram illustrating an example in which a frame rate is changed in the second engine Nar, which is the AR engine, according to a vehicle speed.

. Referring to FIG. 18, if the vehicle speed is the first speed V1, the second engine Nar may generate and output a graphical overlay at the first frame rate FRa, as illustrated in (a) of FIG. 18.

. Meanwhile, if the vehicle speed is the second speed V2 higher than the first speed V1, the second engine Nar may output a graphical overlay at a second frame rate FRb higher than the first frame rate Fra, as illustrated in (b) of FIG. 18. Accordingly, an augmented reality-based graphical overlay may be rapidly provided according to a vehicle speed.

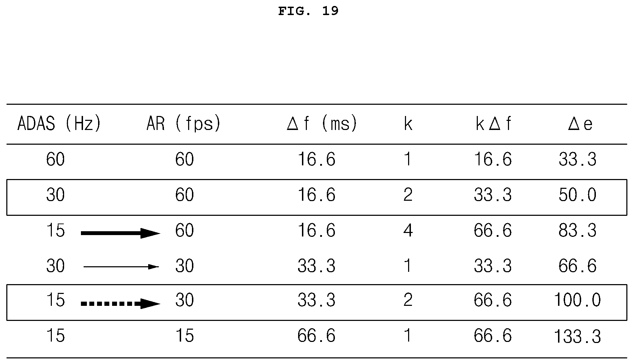

. FIG. 19 is a diagram explaining a relationship between an ADAS frame rate and an AR frame rate.

. Referring to FIG. 19, in the case in which the ADAS frame rate is 60 Hz and the AR frame rate is 60 fps, a time interval $\Delta f$ of the AR frame rate is 16.6 ms, a ratio k between the ADAS frame rate and the AR frame rate is 1, $k\Delta f$ is 16.6 ms, and a delay $\Delta E$ between a vehicle object and a graphical overlay is approximately 33.3 ms.

. Meanwhile, in the case in which the ADAS frame rate is 30 Hz and the AR frame rate is 60 fps, a time interval $\Delta f$ of the AR frame rate is 16.6 ms, a ratio k between the ADAS frame rate and the AR frame rate is 2, $k\Delta f$ is 33.3 ms, and a delay $\Delta E$ between a vehicle object and a graphical overlay is approximately 50 ms.

. Meanwhile, in the case in which the ADAS frame rate is 15 Hz and the AR frame rate is 60 fps, a time interval $\Delta f$ of the AR frame rate is 16.6 ms, a ratio k between the ADAS frame rate and the AR frame rate is 4, $k\Delta f$ is 66.6 ms, and a delay $\Delta E$ between a vehicle object and a graphical overlay is approximately 83.3 ms.

. Meanwhile, in the case in which the ADAS frame rate is 30 Hz and the AR frame rate is 30 fps, a time interval $\Delta f$ of the AR frame rate is 16.6 ms, a ratio k between the ADAS frame rate and the AR frame rate is 1, $k\Delta f$ is 33.3 ms, and a delay $\Delta E$ between a vehicle object and a graphical overlay is approximately 66.6 ms.

. Meanwhile, in the case in which the ADAS frame rate is 15 Hz and the AR frame rate is 30 fps, a time interval $\Delta f$ of the AR frame rate is 33.3 ms, a ratio k between the ADAS frame rate and the AR frame rate is 2, $k\Delta f$ is 66.6 ms, and a delay $\Delta E$ between a vehicle object and a graphical overlay is approximately 100 ms.

. Meanwhile, in the case in which the ADAS frame rate is 15 Hz and the AR frame rate is 15 fps, a time interval $\Delta f$ of the AR frame rate is 66.6 ms, a ratio k between the ADAS frame rate and the AR frame rate is 1, $k\Delta f$ is 66.6 ms, and a delay $\Delta E$ between a vehicle object and a graphical overlay is approximately 133.3 ms.

. Referring to FIG. 19, it can be seen that when the ratio k between the ADAS frame rate and the AR frame rate is 1, the delay $\Delta E$ between the vehicle object and the graphical overlay increases to 33.3 ms, 66.6 ms, and 133.3 ms as the AR frame rate decreases to 60 fps, 30 fps, and 15 fps.

. Accordingly, in the case in which a ratio of a graphical overlay-based frame data to an object-based frame data is constant, the processor 175 may increase the frame rate of the graphical overlay-based frame data.

. Specifically, in the case in which a ratio of the graphical overlay-based frame data to the object-based frame data is constant, the second engine Nar executed in the processor 175 desirably increases the frame rate of the graphical overlay-based frame data. Accordingly, an augmented reality-based graphical overlay may be rapidly and stably provided.

. Meanwhile, it can be seen that when the ratio k between the ADAS frame rate and the AR frame rate is 2, the delay $\Delta E$ between the vehicle object and the graphical overlay increases to 33.3 ms and 66.6 ms as the AR frame rate decreases to 60 fps and 30 fps.

. Accordingly, in the case in which a ratio of the graphical overlay-based frame data to the object-based frame data is an integer multiple equal to or greater than 2, the processor 175 may increase the frame rate of the graphical overlay-based frame data.

. Specifically, in the case in which a ratio of the graphical overlay-based frame data to the object-based frame data is an integer multiple equal to or greater than 2, the second engine Nar executed in the processor 175 desirably increases the frame rate of the graphical overlay-based frame data. Accordingly, an augmented reality-based graphical overlay may be rapidly and stably provided.

. Meanwhile, referring to FIG. 19, it can be seen that the delay $\Delta E$ between the vehicle object and the graphical overlay increases to 33.3 ms, 66.6 ms, and 133.3 ms as the AR frame rate decreases to 60 fps, 30 fps, and 15 fps.

. Conversely, it can be seen that as the AR frame rate increases to 15 fps, 30 fps, and 60 fps, the delay $\Delta E$ between the vehicle object and the graphical overlay decreases to 133.3 ms, 66.6 ms, and 33.3 ms.

. Meanwhile, the processor 175 may increase the frame rate of the graphical overlay-based frame data as the vehicle speed increases.

. Specifically, the second engine Nar executed in the processor 175 may increase the frame rate of the graphical overlay-based frame data as the vehicle speed increases. Accordingly, an augmented reality-based graphical overlay may be rapidly provided according to a vehicle speed.

. Meanwhile, in the case in which the vehicle speed is lower than or equal to a reference speed, battery power consumption increases due to an increase in usage of a battery (not shown) in a hybrid vehicle or the electric vehicle 200, such that it is desirable to reduce other unnecessary power consumption.

. Accordingly, in the case in which the vehicle speed is lower than or equal to the reference speed, the processor 175 may decrease an object-based ADAS frame rate.

. For example, in the case in which the vehicle speed is lower than or equal to the reference speed, the processor 175 may decrease the object-based ADAS frame rate from 60 fps to 30 fps or from 30 fps to 15 fps, thereby reducing power consumption.

. Meanwhile, in the case in which the vehicle speed is lower than or equal to the reference speed, the processor 175 may increase the AR frame rate while reducing the object-based ADAS frame rate. Accordingly, an augmented reality-based graphical overlay may be rapidly and stably provided while reducing power consumption.

. Meanwhile, if an amount of light in the camera data is reduced due to a change in environment when daytime changes to nighttime during driving of the vehicle 200, the processor 175 may decrease the object-based ADAS frame rate in order to secure a sufficient amount of light.

. That is, if an amount of light around the vehicle 200 is smaller than or equal to a reference amount of light, or if luminance of the camera data is lower than or equal to a reference luminance, the processor 175 may decrease the object-based ADAS frame rate.

. For example, if an amount of light around the vehicle 200 is smaller than or equal to a reference amount of light, or if luminance of the camera data is lower than or equal to a reference luminance, the processor 175 may decrease the object-based ADAS frame rate from 60 fps to 30 fps or from 30 fps to 15 fps.

. Accordingly, as the object-based ADAS frame rate decreases, luminance in the object-based ADAS frame increases, such that signal processing may be stably performed.

. Meanwhile, if an amount of light around the vehicle 200 is smaller than or equal to a reference amount of light, or if luminance of the camera data is lower than or equal to a reference luminance, the processor 175 may increase the AR frame rate while reducing the object-based ADAS frame rate. Accordingly, an augmented reality-based graphical overlay may be rapidly and stably provided while stably performing signal processing.

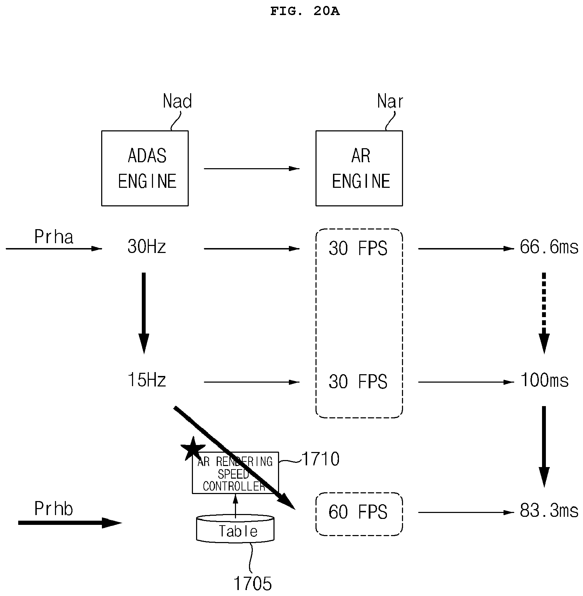

. FIG. 20A is a diagram illustrating an example in which the first engine NAd operates at 30 Hz or 15 HZ, and the second engine Nar operates at 30 fps.

. Referring to FIG. 20A, in the case in which the ADAS frame rate output from the first engine NAd is 30 Hz and the AR frame rate output from the second engine Nar is 30 fps, a time interval $\Delta f$ of the AR frame rate is 16.6 ms, a ratio k between the ADAS frame rate and the AR frame rate is 1, k$\Delta f$ is 33.3 ms, and a delay $\Delta E$ between a vehicle object and a graphical overlay is approximately 66.6 ms.

. Meanwhile, in the case in which the ADAS frame rate output from the first engine NAd is 15 Hz and the AR frame rate is 30 fps, a time interval $\Delta f$ of the AR frame rate is 33.3 ms, a ratio k between the ADAS frame rate and the AR frame rate is 2, k$\Delta f$ is 66.6 ms, and a delay $\Delta E$ between a vehicle object and a graphical overlay is approximately 100 ms.

. Meanwhile, in order to reduce the delay $\Delta E$ of about 100 ms, the AR rendering speed controller 1710 in the processor 175 may change the frame rate of the second engine Nar based on data in the table 1705.

. Particularly, the AR rending speed controller 1710 desirably increases the frame rate of the second engine Nar from 30 fps to 60 fps based on the data in the table 1705. Accordingly, the delay $\Delta E$ may be reduced from 100 m to 83.3 ms as illustrated herein, thereby achieving the effect of reducing the delay by a maximum of 16. 7 ms.

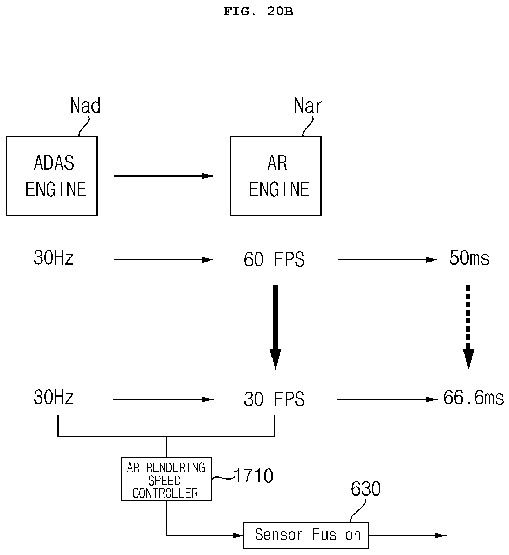

. FIG. 20B is a diagram illustrating an example in which the first engine NAd operates at 30Hz, and the second engine Nar operates at 60 fps or 30 fps.

. Referring to FIG. 20B, in the case in which the ADAS frame rate output from the first engine NAd is 30 Hz and the AR frame rate output from the second engine Nar is 60fps, a time interval $\Delta f$ of the AR frame rate is 16.6 ms, a ratio k between the ADAS frame rate and the AR frame rate is 2, k$\Delta f$ is 33.3 ms, and a delay $\Delta E$ between a vehicle object and a graphical overlay is approximately 50 ms.

. Meanwhile, in the case in which the ADAS frame rate output from the first engine NAd is 30 Hz and the AR frame rate output from the second engine Nar is 30 fps, a time interval $\Delta f$ of the AR frame rate is 16.6 ms, a ratio k between the ADAS frame rate and the AR frame rate is 1, k$\Delta f$ is 33.3 ms, and a delay $\Delta E$ between a vehicle object and a graphical overlay is approximately 66.6 ms.

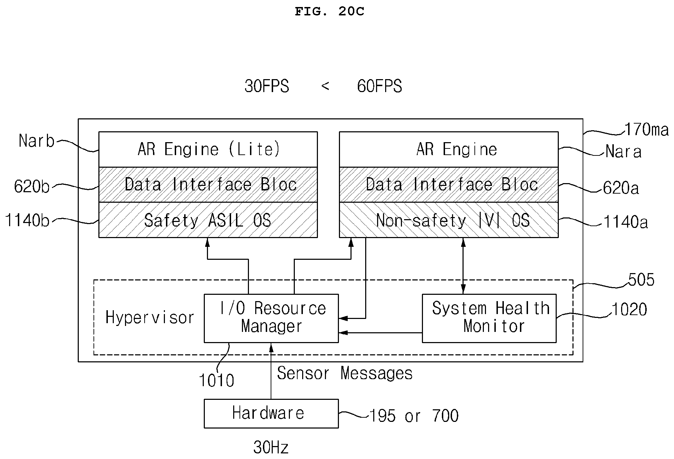

. FIG. 20C is a diagram illustrating an example in which the second engine Nar is divided into two parts Nara and Narb.

. Referring to FIG. 20C, a signal processing device 170ma may execute a first augmented reality engine Nara, which is a main AR engine, on a first operating system 1140a, and may execute a second augmented reality engine Narb, which is a sub AR engine, on a second operating system 1140b different from the first operating system 1140a.

. Meanwhile, in the case in which the first augmented reality engine Nara stops operating due to system malfunction and the like, the signal processing device 170ma desirably operates to stably output a graphical overlay, instead of reducing the delay $\Delta E$ between the vehicle object and the graphical overlay shown in the above Equation 1.

. To this end, the processor 175 in the signal processing device 170ma may perform operation to increase the delay $\Delta E$ between the vehicle object and the graphical overlay, as illustrated in FIG. 20B.

. That is, in the case in which the first augmented reality engine Nara, operating at 60 fps, stops operating due to system malfunction and the like, the signal processing device 170ma may control the second augmented reality engine Narb, operating at 30 fps, to be executed immediately.

. That is, the AR rendering speed controller 1710 may control the second augmented reality engine Narb to operate at 30 fps.

. Meanwhile, the delay ∆E between the vehicle object and the graphical overlay during operation of the first augmented reality engine Nara is 50 ms, and the delay ∆E between the vehicle object and the graphical overlay during operation of the second augmented reality engine Narb increases to 66 ms.

. Accordingly, a graphical overlay may be stably output even when the first augmented reality engine Nara stops operating due to system malfunction and the like.

. Meanwhile, during the operation of the second augmented reality engine Narb, it is desirable to further consider latency of the sensor fusion block 630.

. Meanwhile, various in-vehicle augmented reality apparatuses 1000 illustrated in FIGS. 11 and 12 may project graphical overlay-based frame data, generated by the signal processing device 170, onto the windshield through the image projection device 180h.

. Alternatively, various in-vehicle augmented reality apparatuses 1000 illustrated in FIGS. 11 and 12 may project graphical overlay-based frame data, generated by the signal processing device 170, onto another display 180a or 180b through the image projection device 180h.

. Meanwhile, an example is illustrated in which various in-vehicle augmented reality apparatuses 1000 illustrated in FIGS. 11 and 12 includes at least one camera 195, the image projection device 180h configured to project forward an image, and the signal processing device 170 including and the processor 175 configured to generate graphical overlay-based frame data based on camera data from the camera 195, but unlike the example, various modifications may be made.

. For example, an in-vehicle augmented reality apparatus 1005 according to another embodiment of the present disclosure may include at least one camera 195, the signal processing device 170 including the processor 175 configured to generate a graphical overlay based on camera data from the camera 195, and an AR glass (not shown) configured to output a graphical overlay output from the signal processing device 170. That is, the in-vehicle augmented reality apparatus 1005 may include the AR glass (not shown) instead of the image projection device 180h.

. It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising:

a memory configured to store map data; and
a processor configured to generate a graphical overlay based on camera data from a camera, or the map data, or sensor data from a sensor device,
wherein the processor is configured to :

in response to a vehicle speed based on speed data from the sensor device being a first speed, output a graphical overlay at a first frame rate, and
in response to a vehicle speed being a second speed higher than the first speed, output a graphical overlay at a second frame rate greater than the first frame rate.

2. The signal processing device of claim 1, wherein the processor is configured to :

execute a plurality of virtual machines on an executed hypervisor,
detect an object from the camera data through a first engine executed in one of the plurality of virtual machines,
transmit the detected object to a second engine through a shared memory based on the hypervisor,
generate the graphical overlay based on the detected object through the second engine executed in some of the plurality of virtual machines, and output the generated graphical overlay.

3. The signal processing device of claim 2, wherein in response to the vehicle speed being a second speed higher than the first speed, the second engine is configured to output a graphical overlay at a second frame rate greater than the first frame rate.

4. The signal processing device of claim 1, wherein the processor is configured to detect object from the camera data, output object-based frame data based on the detected object, through the first engine, and generate graphical overlay-based frame data based on the object-based frame data, through the second engine and output the graphical overlay-based frame data.

5. The signal processing device of claim 4, wherein in the case in which a ratio of the graphical overlay-based frame data to the object-based frame data is constant, the processor is configured to increase a frame rate of the graphical overlay-based frame data.

6. The signal processing device of claim 4, wherein in the case in which a ratio of the graphical overlay-based frame data to the object-based frame data is an integer multiple, the processor is configured to increase the frame rate of the graphical overlay-based frame data.

7. The signal processing device of claim 4, wherein the processor is configured to increase the frame rate of the graphical overlay-based frame data as the vehicle speed increases.

8. The signal processing device of claim 4, wherein the processor is configured to display the graphical overlay-based frame data or to output the graphical overlay-based frame data to an image projection device.

9. The signal processing device of claim 4, wherein the processor is configured to :

execute a plurality of virtual machines on an executed hypervisor,
execute the first engine in one of the plurality of virtual machines,
execute the second engine in another one of the plurality of virtual machines, and
transmit the object-based frame data to the second engine through a shared memory based on the hypervisor.

10. The signal processing device of claim 9, wherein a server virtual machine among the plurality of virtual machines is configured to execute the first engine, and
wherein a guest virtual machine among the plurality of virtual machines is configured to execute the second engine.

11. The signal processing device of claim 10, wherein the server virtual machine among the plurality of virtual machines is configured to generate guide information related to vehicle traveling through a third engine based on the sensor data from the sensor device and the map data from the memory, wherein the second engine is configured to generate the graphical overlay-based frame data based on the generated guide information related to vehicle traveling and the detected object, and output the generated graphical overlay-based frame data.

12. The signal processing device of claim 4, wherein the processor is configured to execute a plurality of virtual machines on an executed hypervisor, and execute the first engine or the second engine in one of the plurality of virtual machines.

13. The signal processing device of claim 12, wherein a server virtual machine among the plurality of virtual machines is configured to execute the first engine and the second engine.

14. The signal processing device of claim 12, wherein the server virtual machine among the plurality of virtual machines is configured to generate guide information related to vehicle traveling through a third engine based on the sensor data from the sensor device and the map data from the memory, wherein the second engine is configured to generate the graphical overlay-based frame data based on the generated guide information related to vehicle traveling and the detected object, and output the generated graphical overlay-based frame data.

15. A signal processing device comprising:

a memory configured to store map data; and
a processor configured to generate a graphical overlay based on camera data from a camera, or the map data, or sensor data from a sensor device,
wherein the processor is configured to :

execute a plurality of virtual machines on an executed hypervisor,
detect an object from the camera data through a first engine executed in one of the plurality of virtual machines,
output object-based frame data based on the object detected from the camera data,
generate graphical overlay-based frame data based on the object-based frame data, through a second engine executed in some of the plurality of virtual machines, and output the graphical overlay-based frame data,
wherein in the case in which a ratio of the graphical overlay-based frame data to the object-based frame data is constant, the processor is configured to increase a frame rate of the graphical overlay-based frame data.

16. The signal processing device of claim 15, wherein in the case in which a ratio of the graphical overlay-based frame data to the object-based frame data is an integer multiple, the processor is configured to increase the frame rate of the graphical overlay-based frame data.

17. The signal processing device of claim 15, wherein the processor is configured to increase the frame rate of the graphical overlay-based frame data as the vehicle speed increases.

18. An augmented reality apparatus for a vehicle, the apparatus comprising:

at least one camera; and
a signal processing device including a processor configured to generate a graphical overlay based on camera data from the camera,

wherein the signal processing device comprises the signal processing device of any one of claims 1 to 17.

FIG. 1

FIG. 2

100

FIG.3

EP 4 571 661 A1

EP 4 571 661 A1

FIG. 4

400

430

440

Cluster VM

Cluster HMI

HMI Framework

Native Services

| CAN | Storage F/E | Ethernet F/E |

431    432    433

AVN VM

AVN HMI

Application Framework

Native Services

| Audio, Radio, etc | Storage F/E | Ethernet F/E |

441    442    423

410

DomO

412      413

| Physical D/D Storage | Back-end | Physical D/D Ethernet | Back-end |

Hypervisor

405

Storage

Ethernet

CAN . . .

Audio
Radio
USB
Wi-Fi/BT . . .

27

FIG.5

**500**

**510**

**520**

Sever VM
supervisory
& systemic services

Vehicle Info.

Adaptive Autosar

Radio(Tuner)

Audio Mgr.

⋮

I/O Server — 525 / 522

Physical D/D — 521

Dom0

virtio-backend — 512

Physical D/D — 511

⋮

**530**

Cluster VM

Cluster HMI

HMI Framework

Virtual I/O APIs

533

virtio-backend — 531

I/O Client — 535 / 532

**540**

AVN VM

AVN HMI

Application Framework

Virtual I/O APIs — 543

virtio-backend — 541

I/O Client — 545 / 542

Hypervisor — 505

SoC — 170

509

Wi-Fi/BT

USB

Radio

Audio

CAN

Ethernet

Storage

FIG.6

FIG. 7A

400b

420                                    430                                    440

| Linux VM | Cluster VM | AVN VM |
|---|---|---|
| Linux HMI | Cluster HMI | AVN HMI |
| HMI Framework | HMI Framework | Application Framework |
| Virtual I/O APIs | Virtual I/O APIs | Virtual I/O APIs |

423                                    433                                    443

422                                    432                                    442

| IxF Server | IxF Client | IxF Client |

408a

shared mem.

408b

shared mem.    Hypervisor

405

FIG. 7B

180h

180a

180b

180a   705a

705b   180b

T=T1

T=T0

FIG. 8

500

520                                    530                                    540

**Sever VM**                           **Cluster VM**                         **AVN VM**

| Linux HMI | | Cluster HMI | | AVN HMI |

| HMI Framework | | HMI Framework | | Application Framework |

| Virtual I/O APIs | | Virtual I/O APIs | | Virtual I/O APIs |
523                                    533                                    543

| IxF Server | | IxF Client | | IxF Client |
522                                    532                                    542

| security mgr |
526

| shared mem. | 508

Hypervisor

505

FIG. 9A

500b

520                                    530                                    540

| SeverVM | Cluster VM | AVN VM |
|---|---|---|
| Linux HMI | Cluster HMI | AVN HMI |
| | HMI Framework | Application Framework |
| | Virtual I/O APIs | Virtual I/O APIs |

virtio-backend    IofServer

522

526 — Security MGR

S1

S3

virtio-backend    IofClient

531    532

virtio-backend    IxfClient

542

541

shared mem.

S2

Hypervisor

508                                                                    505

**FIG. 9B**

T=T1

T=T1

FIG. 10A

1000x

1005x

IMAGE PROJECTING DEVICE

180h — AR ENGINE

Nar

1006 — VEHICLE NETWORK GATEWAY

1003 — ADAS DEVICE

CAMERA

SENSOR DEVICE

TRANSCEIVER

195

700

120

FIG. 10B

1000y

180h — IMAGE PROJECTING DEVICE

Nar — AR ENGINE ◄——— AR Camera  195b

1006 — VEHICLE NETWORK GATEWAY

1003a — ADAS ECU

SENSOR ECU — 1003b

ADAS CAMERA

SENSOR DEVICE

TRANSCEIVER

195a   700   120

FIG. 11

1000

FIG. 12

1000b

| 520 | 530 | 180a | 180b | 180h |
|---|---|---|---|---|

FIRST DISPLAY

SECOND DISPLAY

IMAGE PROJECTING DEVICE(HUD)

540

SERVER VIRTUAL MACHINE

AR ENGINE ~Nar

ADAS ENGINE ~Nad

Nna

NAVIGATION ENGINE

FIRST GUEST VIRTUAL MACHINE

SECOND GUEST VIRTUAL MACHINE

CAa

AR APPLICATION

HYPERVISOR

SHARED MEMORY ~508

505

PROCESSOR

175

MEMORY ~140

SOC

CAMERA

SENSOR DEVICE

TRANSCEIVER

170

195

700

120

FIG. 13A

FIG. 13B

FIG. 13C

(a)

(b)

FIG.14

FIG. 15A

1710

CURRENT ADAS OPERATING
SPEED VALUE (Hz) → | AR RENDERING
SPEED CONTROLLER | → CHANGED AR RENDERING
SPEED VALUE (FPS)

CURRENT AR RENDERING
SPEED VALUE (FPS) → | | → LATENCY VARIATION VALUE

Table ~1705

FIG. 15B

HUD IMAGINARY PLANE COORDINATE SYSTEM

$Z_{ref}$

$X_{ref}$

$Y_{ref}$

CAMERA COORDINATE SYSTEM

$XYZ_{ref}$ : VEHICLE REFERENCE COORDINATE SYSTEM

**FIG. 15C**

1720

$(X_{local}, Y_{local}, Z_{local})$ → Coordinate System Conversion → $(X_{ref}, Y_{ref}, Z_{ref})$

1725

Factory Calibration Data

**FIG. 15D**

1735

Sensor Latency Constants

1730

ADAS $(X_{ref}, Y_{ref}, Z_{ref}, timestamp)$ → Ego-vehicle State Prediction → $(X_{ref}^*, Y_{ref}^*, Z_{ref}^*)$ for timestamp

GPS (lat, lon, azimuth) → → GPS $(lat^*, lon^*, azimuth^*)$

Vehicle (yaw rate, speed) → → Covariance matrix

FIG. 15E

Car Body

zFrontRight

zRearRight

Center of gravity

zRearLeft

Road Plane

zFrontLeft

stiffnessCoeff

dampingCoeff

Car Wheels

FIG. 15F

(a)

1740

(b)

1750

FIG. 15G

1755

Sensor Latency
Constants

1750

ANGULAR SPEED ———→

Vehicle Motion
Stabilization
(Kalman Filter)

———→

FIG. 16

(a)

1600

1620

1610

(b)

1600b

1620b

1610

ΔE

(c)

Δd_worst

$T_{obs}$   $T_{recv}$   $T_{f-1}$   $T_f$   ...   $T_{f+(k-1)}$   $T_{f+k}$

Δs   Δd   Δf   Δf

physical event   sample arrival   prediction   show   prediction   show

end-to-end latency ΔE

FIG. 17

```
        ┌─────────┐
        │  START  │
        └─────────┘
             │
             ▼
  ┌─────────────────────────┐
  │  RECEIVE CAMERA DATA    │──── S1710
  └─────────────────────────┘
             │
             ▼
  ┌─────────────────────────┐
  │  OUTPUT ADAS FRAME DATA │──── S1720
  └─────────────────────────┘
             │
             ▼
  ┌─────────────────────────┐
  │  RECEIVE SPEED DATA     │──── S1730
  └─────────────────────────┘
             │
             ▼
  ┌─────────────────────────────┐
  │ CHANGE FRAME RATE OF AR FRAME│
  │ DATA BASED ON SPEED DATA     │──── S1740
  │ AND OUTPUT CHANGED FRAME RATE│
  └─────────────────────────────┘
             │
             ▼
        ┌─────────┐
        │   END   │
        └─────────┘
```

FIG. 18

(a)

200

V1

Nar

AR
ENGINE ⟹ FRa

(b)

200

V2

Nar

AR
ENGINE ⟹ FRb>FRa

FIG. 19

| ADAS (Hz) | AR (fps) | Δf (ms) | k | kΔf | Δe |
|---|---|---|---|---|---|
| 60 | 60 | 16.6 | 1 | 16.6 | 33.3 |
| 30 | 60 | 16.6 | 2 | 33.3 | 50.0 |
| 15 → | 60 | 16.6 | 4 | 66.6 | 83.3 |
| 30 → | 30 | 33.3 | 1 | 33.3 | 66.6 |
| 15 ▪▪▪▪▶ | 30 | 33.3 | 2 | 66.6 | 100.0 |
| 15 | 15 | 66.6 | 1 | 66.6 | 133.3 |

FIG. 20A

FIG. 20B

FIG. 20C

30FPS   <   60FPS

Narb — AR Engine (Lite)

620b — Data Interface Bloc

1140b — Safety ASIL OS

170ma
Nara — AR Engine
Data Interface Bloc — 620a
Non-safety IVI OS — 1140a

Hypervisor

I/O Resource Manager

System Health Monitor

505
1020

1010

Sensor Messages

Hardware   — 195 or 700

30Hz

## INTERNATIONAL SEARCH REPORT

International application No.

**PCT/KR2022/019982**

### A. CLASSIFICATION OF SUBJECT MATTER

**G06T 19/00**(2011.01)i; **G06T 15/00**(2006.01)i; **G02B 27/01**(2006.01)i; **G02B 30/10**(2020.01)i

According to International Patent Classification (IPC) or to both national classification and IPC

### B. FIELDS SEARCHED

Minimum documentation searched (classification system followed by classification symbols)

G06T 19/00(2011.01); B60Q 1/04(2006.01); B60W 30/08(2006.01); G06F 9/30(2006.01); G06F 9/4401(2018.01); G06F 9/455(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 하이퍼바이저(hypervisor), 그래픽 오버레이(graphic overlay), 오브젝트(object), 프레임 레이트(frame rate), 딜레이(delay), 레이턴시(latency)

### C. DOCUMENTS CONSIDERED TO BE RELEVANT

| Category* | Citation of document, with indication, where appropriate, of the relevant passages | Relevant to claim No. |
|---|---|---|
| Y | KR 10-2202258 B1 (HUAWEI TECHNOLOGIES CO., LTD. et al.) 13 January 2021 (2021-01-13) See paragraphs [0030]-[0031] and [0041]; and claim 8. | 1-18 |
| Y | KR 10-2212217 B1 (LG ELECTRONICS INC.) 04 February 2021 (2021-02-04) See paragraphs [0030], [0088] and [0203]-[0204]. | 1-14,18 |
| Y | KR 10-2022-0024023 A (ATI TECHNOLOGIES ULC) 03 March 2022 (2022-03-03) See paragraphs [0006]-[0007]. | 5-8,12-17 |
| A | KR 10-2020-0108359 A (MICRON TECHNOLOGY, INC.) 17 September 2020 (2020-09-17) See paragraphs [0107]-[0108]. | 1-18 |
| A | US 2019-0294446 A1 (AMAZON TECHNOLOGIES, INC.) 26 September 2019 (2019-09-26) See claims 10-11. | 1-18 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 April 2023** | **08 May 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/019982**

| Patent document cited in search report | | | Publication date (day/month/year) | Patent family member(s) | | | Publication date (day/month/year) |
|---|---|---|---|---|---|---|---|
| KR | 10-2202258 | B1 | 13 January 2021 | CN | 109690482 | A | 26 April 2019 |
| | | | | EP | 3497562 | A1 | 19 June 2019 |
| | | | | EP | 3497562 | A4 | 24 July 2019 |
| | | | | KR | 10-2019-0044097 | A | 29 April 2019 |
| | | | | US | 11321111 | B2 | 03 May 2022 |
| | | | | US | 2019-0213032 | A1 | 11 July 2019 |
| | | | | WO | 2018-040112 | A1 | 08 March 2018 |
| KR | 10-2212217 | B1 | 04 February 2021 | KR | 10-2019-0106840 | A | 18 September 2019 |
| | | | | US | 2020-0010081 | A1 | 09 January 2020 |
| KR | 10-2022-0024023 | A | 03 March 2022 | CN | 114008588 | A | 01 February 2022 |
| | | | | EP | 3991032 | A1 | 04 May 2022 |
| | | | | JP | 2022-538976 | A | 07 September 2022 |
| | | | | US | 2020-0409732 | A1 | 31 December 2020 |
| | | | | WO | 2020-261180 | A1 | 30 December 2020 |
| KR | 10-2020-0108359 | A | 17 September 2020 | CN | 111684417 | A | 18 September 2020 |
| | | | | EP | 3750055 | A1 | 16 December 2020 |
| | | | | EP | 3750055 | A4 | 02 June 2021 |
| | | | | US | 11416395 | B2 | 16 August 2022 |
| | | | | US | 2019-0243756 | A1 | 08 August 2019 |
| | | | | US | 2022-0398194 | A1 | 15 December 2022 |
| | | | | WO | 2019-152224 | A1 | 08 August 2019 |
| US | 2019-0294446 | A1 | 26 September 2019 | AU | 2020-202180 | A1 | 16 April 2020 |
| | | | | AU | 202180 | B2 | 05 August 2021 |
| | | | | CN | 109564514 | A | 02 April 2019 |
| | | | | CN | 109564514 | B | 08 April 2022 |
| | | | | EP | 3479224 | A1 | 08 May 2019 |
| | | | | JP | 2020-166879 | A | 08 October 2020 |
| | | | | JP | 7007425 | B2 | 24 January 2022 |
| | | | | US | 10318311 | B2 | 11 June 2019 |
| | | | | US | 11068277 | B2 | 20 July 2021 |
| | | | | WO | 2018-005826 | A1 | 04 January 2018 |

Form PCT/ISA/210 (patent family annex) (July 2022)